# EUROPEAN PATENT APPLICATION

(11) **EP 3 534 668 A1**
(43) Date of publication of application: **04.09.2019**
(21) Application number: 17865758.1
(22) Date of filing: 26.10.2017
(51) Int. Cl.: H04W 76/10

(54) **COMMUNICATION SYSTEM, NETWORK DEVICE, AUTHENTICATION METHOD, COMMUNICATION TERMINAL AND SECURITY DEVICE**

(30) Priority: 26.10.2016 IN 201611036774; 26.10.2016 IN 201611036775; 27.01.2017 IN 201711003071
(71) Applicant: NEC Corporation, Tokyo 108-8001 (JP)
(72) Inventor: PRASAD Anand Raghawa, Tokyo 108-8001 (JP); LAKSHMINARAYANAN Sivakamy, Perungudi Chennai 600096 (IN); ARUMUGAM Sivabalan, Perungudi Chennai 600096 (IN); ITO Hironori, Tokyo 108-8001 (JP); KUNZ Andreas, Heidelberg 69115 (DE)
(74) Representative: MacDougall, Alan John Shaw
(86) International application number: PCT/JP2017/038822
(87) International publication number: WO 2018/079690

(57) **Abstract**

The present disclosure aims to provide a communication system configured to execute a security procedure that is necessary to apply an Attach Procedure to a NextGen System. The communication system according to the present disclosure includes: a communication terminal (10) configured to transmit an Attach Request message including Network Slice Selection Assistance Information (NSSAI) and User Equipment (UE) Security Capabilities; and a network apparatus (20) that is arranged in a mobile network (30) and receives an Attach Request message, in which the network apparatus (20) determines whether to allow the communication terminal (10) to be connected to a core network indicated by the NSSAI among a plurality of core networks partitioned by network slicing using the NSSAI and the UE Security Capabilities.

## Description

### Technical Field

The present disclosure relates to a communication system, a network apparatus, an authentication method, a communication terminal, and a security apparatus.

### Background Art

Use of Long Term Evolution (LTE), which is a standard specified by the 3rd Generation Partnership Project (3GPP), as a radio communication system used between a communication terminal and a base station has become widespread. LTE is a radio communication system used to achieve a high-speed and high-volume radio communication. Further, as a core network that accommodates a radio network that uses LTE, a packet network referred to as System Architecture Evolution (SAE), Evolved Packet Core (EPC) or the like has been specified in the 3GPP.

It is required that the communication terminal be registered in a core network in order to use a communication service that uses LTE. As a procedure for registering the communication terminal in the core network, an Attach Procedure is specified in the 3GPP. A Mobility Management Entity (MME) arranged in the core network executes authentication processing and the like of the communication terminal using identification information on the communication terminal in the Attach Procedure. The MME performs authentication processing of the communication terminal in collaboration with a Home Subscriber Server (HSS) or the like that manages the Subscription. As the identification information on the communication terminal, International Mobile Equipment Identity (IMEISV), International Mobile Subscriber Identity (IMSI) or the like is, for example, used.

In recent years, in the 3GPP, a study on Internet of Things (IoT) services has been conducted. In the IoT services, a large number of terminals that autonomously execute communication (hereinafter they will be referred to as IoT terminals) without requiring a user's manipulation are used. In order for a service provider to provide IoT services using a large number of IoT terminals, in mobile networks managed by communication providers, it is desired to efficiently accommodate a large number of IoT terminals. The mobile network is a network that includes a radio network and a core network.

Non-Patent Literature 1 discloses, in Annex B, a configuration of a core network in which network slicing is applied. The network slicing is a technique for partitioning a core network for each of the services to be provided in order to efficiently accommodate a large number of IoT terminals. Non-Patent literature 1 discloses, in Section 5.1, that the respective partitioned networks (network slice system) need to be customized or optimized.

The system in which the network slicing is applied is also referred to as, for example, a Next Generation (NextGen) System. Further, the radio network used in the NextGen System may be referred to as a Next Generation (NG) Radio Access Network (RAN).

### Citation List

### Non-Patent Literature

[Non-Patent Literature 1] 3GPP TR23.799 V1.0.2 (2016-9)
[Non-Patent Literature 2] 3GPP TR33.899 V0.5.0 (2016-10)

### Summary of Invention

### Technical Problem

In the NextGen System as well, a communication terminal including an IoT terminal or the like needs to be registered in the NextGen System using a procedure similar to the Attach Procedure in which the communication terminal is registered in the core network specified as SAE. There is a problem, however, in the NextGen System, that since various functionalities that relate to security processing have been introduced therein, the Attach procedure currently specified in the 3GPP cannot be directly applied to the NextGen System. For example, in Non-Patent Literature 2, introduction of Authentication Credential Repository and Processing Function (ARPF), Authentication Server Function (AUSF), Security Anchor Function (SEAF), Security Context Management Function (SCMF) and the like into the NextGen System has been discussed.

The present disclosure aims to provide a communication system, a network apparatus, an authentication method, a communication terminal, and a security apparatus configured to execute a security procedure that is necessary to apply the Attach Procedure to the NextGen System.

### Solution to Problem

A communication system according to a first aspect of the present disclosure includes: a communication terminal configured to transmit an Attach Request message including Network Slice Selection Assistance Information (NSSAI) and User Equipment (UE) Security Capabilities; and a network apparatus that is arranged in a mobile network and receives the Attach Request message, in which the network apparatus determines whether to allow connection of the communication terminal to a core network indicated by the NSSAI among a plurality of core networks partitioned by network slicing using the NSSAI and the UE Security Capabilities.

A network apparatus according to a second aspect of the present disclosure is configured to perform the following processing of: receiving an Attach Request message from a communication terminal configured to transmit the Attach Request message including Network Slice Selection Assistance Information (NSSAI) and User Equipment (UE) Security Capabilities; and determining whether to allow connection of the communication terminal to a core network indicated by the NSSAI among a plurality of core networks partitioned by network slicing using the NSSAI and the UE Security Capabilities.

An authentication method according to a third aspect of the present disclosure includes: receiving an Attach Request message from a communication terminal that transmits the Attach Request message including Network Slice Selection Assistance Information (NSSAI) and User Equipment (UE) Security Capabilities; and determining whether to allow connection of the communication terminal to a core network indicated by the NSSAI among a plurality of core networks partitioned by network slicing using the NSSAI and the UE Security Capabilities.

### Advantageous Effects of Invention

According to the present disclosure, it is possible to provide a communication system, a network apparatus, an authentication method, a communication terminal, and a security apparatus configured to execute a security procedure that is necessary to apply an Attach Procedure to a NextGen System.

### Brief Description of Drawings

Fig. 1 is a configuration diagram of a communication system according to a first example embodiment;
Fig. 2 is a configuration diagram of a communication system according to a second example embodiment;
Fig. 3 is a diagram showing an Attach Procedure in a NextGen System according to the second example embodiment;
Fig. 4 is a diagram showing an Attach Procedure in a NextGen System according to a third example embodiment;
Fig. 5 is a diagram showing an Attach Procedure in a NextGen System according to a fourth example embodiment;
Fig. 6 is a diagram showing an Attach Procedure in a NextGen System according to a fifth example embodiment;
Fig. 7 is a diagram showing the Attach Procedure in the NextGen System according to the fifth example embodiment;
Fig. 8 is a diagram showing the Attach Procedure in the NextGen System according to the fifth example embodiment;
Fig. 9 is a configuration diagram of a communication system according to a sixth example embodiment;
Fig. 10 is a configuration diagram of a communication system according to a seventh example embodiment;
Fig. 11 is a diagram showing a hierarchical structure of security keys according to the seventh example embodiment;
Fig. 12 is a diagram showing a NAS Security Procedure in a NextGen System according to the seventh example embodiment;
Fig. 13 is a diagram showing the NAS Security Procedure in the NextGen System according to the seventh example embodiment;
Fig. 14 is a diagram showing the NAS Security Procedure in the NextGen System according to the seventh example embodiment;
Fig. 15 is a diagram showing a UP Security Procedure in a NextGen System according to an eighth example embodiment;
Fig. 16 is a diagram showing the UP Security Procedure in the NextGen System according to the eighth example embodiment;
Fig. 17 is a diagram showing the UP Security Procedure in the NextGen System according to the eighth example embodiment;
Fig. 18 is a diagram showing the UP Security Procedure in the NextGen System according to the eighth example embodiment;
Fig. 19 is a diagram showing the UP Security Procedure in the NextGen System according to the eighth example embodiment;
Fig. 20 is a diagram showing the UP Security Procedure in the NextGen System according to the eighth example embodiment;
Fig. 21 is a diagram showing an AS Security Procedure in a NextGen System according to a ninth example embodiment;
Fig. 22 is a configuration diagram of a communication system according to a tenth example embodiment;
Fig. 23 is a diagram for describing an AKA algorithm according to the tenth example embodiment;
Fig. 24 is a diagram for describing the AKA algorithm according to the tenth example embodiment;
Fig. 25 is a diagram showing a modified example of a hierarchical structure of security keys according to the tenth example embodiment;
Fig. 26 is a diagram showing a flow of derivation of the security keys according to the tenth example embodiment;
Fig. 27 is a modified example of the hierarchical structure of the security keys according to the tenth example embodiment;
Fig. 28 is a diagram showing a flow of derivation of the security keys according to the tenth example embodiment;
Fig. 29 is a diagram showing a modified example of the hierarchical structure of the security keys according to the tenth example embodiment;
Fig. 30 is a diagram showing a flow of derivation of the security keys according to the tenth example embodiment;
Fig. 31 is a diagram showing a modified example of the hierarchical structure of the security keys according to the tenth example embodiment;
Fig. 32 is a diagram showing a flow of derivation of the security keys according to the tenth example embodiment;
Fig. 33 is a diagram showing a modified example of the hierarchical structure of the security keys according to the tenth example embodiment;
Fig. 34 is a diagram showing a flow of derivation of the security keys according to the tenth example embodiment;
Fig. 35 is a diagram showing a modified example of the hierarchical structure of the security keys according to the tenth example embodiment;
Fig. 36 is a diagram showing a flow of derivation of the security keys according to the tenth example embodiment;
Fig. 37 is a diagram showing a modified example of the hierarchical structure of the security keys according to the tenth example embodiment;
Fig. 38 is a diagram showing a flow of derivation of the security keys according to the tenth example embodiment;
Fig. 39 is a diagram showing a modified example of the hierarchical structure of the security keys according to the tenth example embodiment; and
Fig. 40 is a diagram showing a flow of derivation of the security keys according to the tenth example embodiment.

### Description of Embodiments

### (First Example Embodiment)

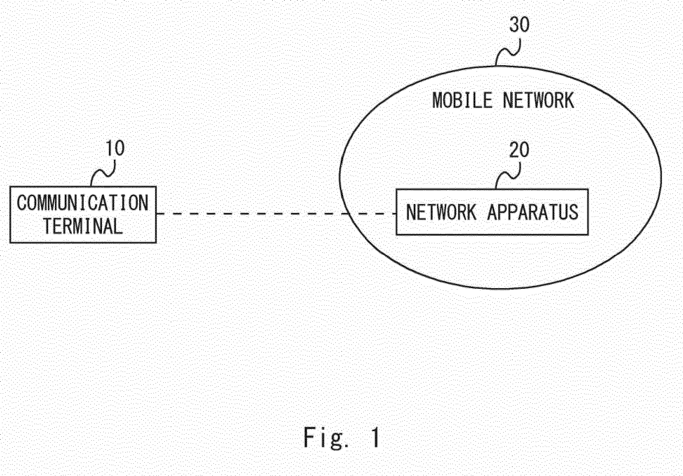

Hereinafter, with reference to the drawings, example embodiments of the present disclosure will be explained. Referring to Fig. 1, a configuration example of a communication system according to a first example embodiment will be explained. The communication system shown in Fig. 1 includes a communication terminal 10 and a network apparatus 20. The network apparatus 20 is arranged in a mobile network 30. Each of the communication terminal 10 and the network apparatus 20 may be a computer apparatus operated by a processor executing a program stored in a memory. The processor may be, for example, a microprocessor, a Micro Processing Unit (MPU), or a Central Processing Unit (CPU). The memory may be a volatile memory or a nonvolatile memory, and may be composed of a combination of the volatile memory and the nonvolatile memory. The processor executes one or more programs including instructions for causing the computer to execute an algorithm described with reference to the following drawings.

The communication terminal 10 may be, for example, a mobile telephone terminal, a smartphone terminal, or an IoT terminal.

The mobile network 30 includes a radio access network and a core network that perform radio communication with the communication terminal 10. The network apparatus 20 may be, for example, a node apparatus or an entity whose operations are defined in the 3GPP.

The communication terminal 10 transmits an Attach Request message including Network Slice Selection Assistance Information (NSSAI) and User Equipment (UE) Security Capabilities (or UE Security Capability) to the network apparatus 20. The NSSAI is, for example, information for identifying the core network that provides a service used by the communication terminal 10. In the core network included in the mobile network 30, network slicing is applied, and the core network is partitioned for each of services to be provided. The partitioned network may be referred to as a network slice.

The UE Security Capabilities may be a set of identification information that corresponds to algorithm information used for encryption and integrity protection processing implemented in the UE, which is the communication terminal. (The set of identifiers corresponding to the ciphering and integrity algorithms implemented in the UE).

The communication terminal 10 transmits the Attach Request message to the network apparatus 20 when, for example, the state of a power supply has been changed from an OFF state to an ON state.

The network apparatus 20 receives the Attach Request message transmitted from the communication terminal 10. Further, the network apparatus 20 determines whether to allow the communication terminal 10 to be connected to the core network indicated by the NSSAI among a plurality of core networks partitioned by network slicing using the NSSAI and the UE Security Capabilities included in the Attach Request message.

As described above, the communication system shown in Fig. 1 is able to determine whether to allow the communication terminal 10 to be connected to the core network to which the communication terminal 10 requests connection even when the core network is partitioned by network slicing. Accordingly, the communication system shown in Fig. 1 is able to execute a security procedure that is necessary to apply the Attach Procedure in the NextGen System in which the network slicing is applied.

### (Second Example Embodiment)

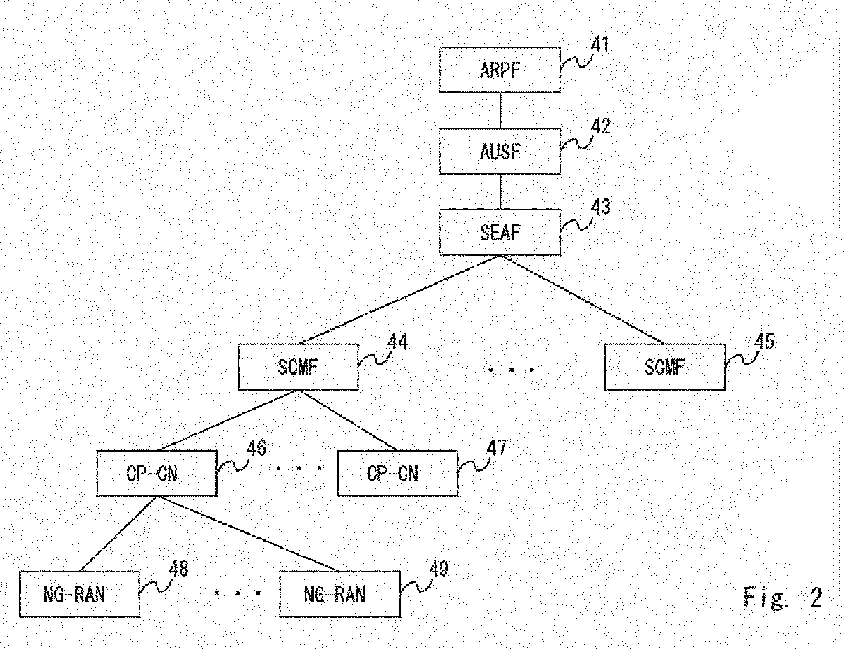

Referring next to Fig. 2, a configuration example of a communication system according to a second example embodiment will be explained. The communication system shown in Fig. 2 indicates the NextGen System. The communication system shown in Fig. 2 includes an ARPF entity 41 (hereinafter it will be referred to as an ARPF 41), an AUSF entity 42 (hereinafter it will be referred to as an AUSF 42), an SEAF entity 43 (hereinafter it will be referred to as an SEAF 43), an SCMF entity 44 (hereinafter it will be referred to as an SCMF 44), an SCMF 45, a C-Plane Core Network (CP-CN) entity 46 (hereinafter it will be referred to as a CP-CN 46), a CP-CN 47, an NG-RAN entity 48 (hereinafter it will be referred to as an NG-RAN 48), and an NG-RAN 49. The CP-CN 46 includes an MM entity that executes Mobility Management and an SM entity that executes Session Management.

Specifically, the MM may be, for example, to register UE or a user who manages the UE in a mobile network, support reachability for enabling mobile terminated communication, detect unreachable UE, allocate network functionalities regarding Control (C)-Plane and User (U)-Plane, and limit mobility.

Further, the SM is to configure IP connectivity or non-IP connectivity for the UE. In other words, the SM may be to manage or control connectivity of the U-Plane.

The ARPF 41, the AUSF 42, the SEAF 43, the SCMF 44, the SCMF 45, the CP-CN 46, and the CP-CN 47 form a core network. Each of the entities arranged in the core network may be referred to as a core network apparatus or a security apparatus. The NG-RAN 48 and the NG-RAN 49 form a radio access network. The NG-RAN 48 may be, for example, a base station used in the NextGen System.

Each of the entities shown in Fig. 2 may include a plurality of functionalities. For example, while the ARPF 41 is an entity different from the AUSF 42 in Fig. 2, one entity that executes the ARPF and the AUSF may instead be used.

The ARPF entity is a node apparatus that executes the ARPF. The AUSF entity is a node apparatus that executes the AUSF. The ARPF and the AUSF are, for example, functionalities for executing authentication processing regarding whether the User Equipment (UE) that corresponds to the communication terminal 10 can be connected to the NextGen System. The ARPF 41 and the AUSF 42 generate security keys used for the authentication processing and retain the generated security keys.

The SEAF and the SCMF are functionalities for executing authentication processing regarding whether the UE can be connected to the core network in which the network slicing is applied. Each of the SCMF 44 and the SEAF 43 may be referred to as a security apparatus. The SEAF 43 derives a security key K_{SCMF} from a security key K_{SEAF} received from the AUSF 42. The SEAF 43 transmits the security key K_{SCMF} to the SCMF 44 and the SCMF 45. The SCMF 44 derives a security key K_{CP-CN} from the security key K_{SCMF} received from the SEAF 43. The SCMF 44 transmits the security key K_{CP-CN} to the CP-CN 46 and the CP-CN 47.

The NG-RAN 48 and the NG-RAN 49 receive a security key K_{AN} derived by the SCMF 44 or the SEAF 43.

Each of the entities that form the NextGen System executes security processing such as authentication processing of the UE and integrity protection processing of the message using the received security key K. Further, the security key K may also be referred to as a security context.

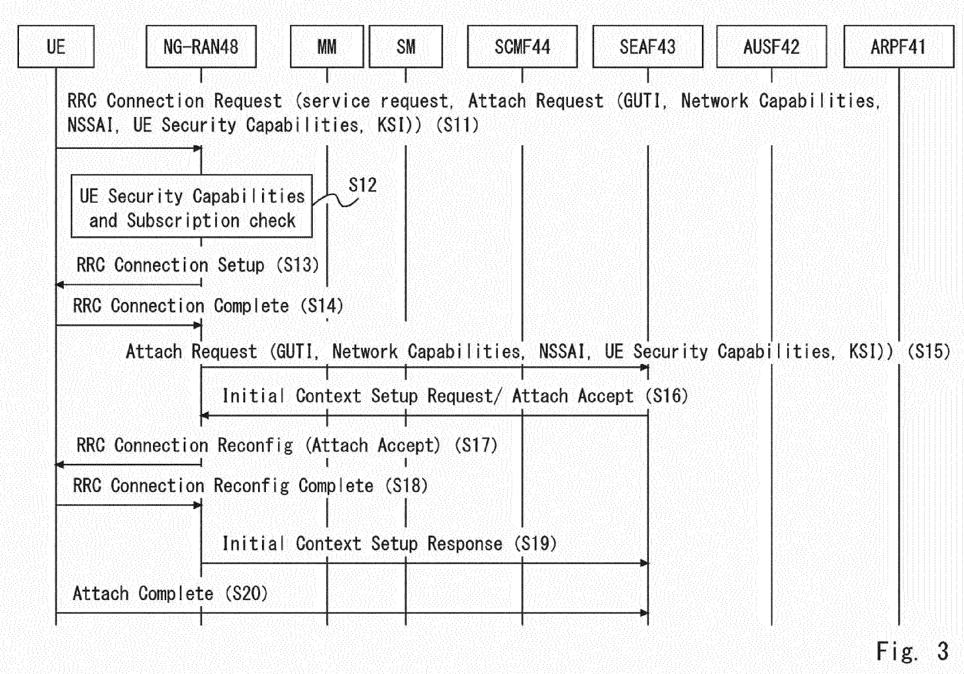

Referring next to Fig. 3, the Attach Procedure in the NextGen System will be explained. First, the UE transmits an RRC Connection Request message to the NG-RAN 48 (S11). The Attach Request message is piggy-backed within the RRC Connection Request message. The Attach Request message includes, as parameters, a Globally Unique Temporary UE Identity (GUTI), Network Capabilities, a Key Set Identifier (KSI), the NSSAI, and the UE Security Capabilities. The GUTI is an identifier temporarily allocated to the UE. The Network Capabilities are, for example, security algorithms of NAS and AS supported in the UE. The KSI is identification information of the key that the UE retains.

Next, the NG-RAN 48 checks the UE Security Capabilities and the Subscription for the UE (S12). The check of the UE Security Capabilities may be to determine whether algorithm information used for the encryption and the integrity protection processing executed in the UE coincides with algorithm information used for encryption and integrity protection processing executed in the core network or the NG-RAN 48 to which the UE requests connection. Further, the check of the Subscription may be to check whether the UE has been allowed to be connected to the NextGen System or whether the UE has been allowed to be connected to the core network. The core network may be a core network to which the UE requests connection, and may be formed of one or more network slices. The core network to which the UE requests connection may be determined based on the NSSAI.

It is assumed that the NG-RAN 48 retains the security key K_{AN}. It is assumed that the UE retains a key similar to the security key K_{AN} retained by the NG-RAN 48 as well. In this case, the NG-RAN 48 is able to execute the integrity protection processing of the Attach Request message included in the RRC Connection Request message using the security key K_{AN}. The NG-RAN 48 is able to guarantee that the Attach Request message has not been falsified by executing the integrity protection processing.

Next, the NG-RAN 48 transmits an RRC Connection Setup message to the UE in response to the RRC Connection Request message (S13). Next, the UE transmits an RRC Connection Complete message to the NG-RAN 48 in order to notify the NG-RAN 48 that it has received the RRC Connection Setup message (S14).

Next, the NG-RAN 48 transmits an Attach Request message to the SEAF 43 (S15). This Attach Request message includes the GUTI, the Network Capabilities, the KSI, the NSSAI, and the UE Security Capabilities. The SEAF 43 transmits an Initial Context Setup Request/ Attach Accept message to the NG-RAN 48.

Next, the NG-RAN 48 transmits an RRC Connection Reconfiguration (RRC Connection Reconfig) message to the UE (S17). The Attach Accept message is piggy-backed within the RRC Connection Reconfig message.

Next, the UE transmits an RRC Connection Reconfig Complete message to the NG-RAN 48 in response to the RRC Connection Reconfig message (S18). Next, the NG-RAN 48 transmits an Initial Context Setup Response message to the SEAF 43 in response to the Initial Context Setup Request message (S19). Next, the UE transmits an Attach Complete message to the SEAF 43 via the NG-RAN 48 (S20).

When it is determined in Step S12 that at least one of the condition that the algorithm information used for the encryption and the integrity protection processing executed in the UE does not coincide with that executed in the NG-RAN 48 and the condition that the UE is not allowed to be connected to the NextGen System or the core network is satisfied, the NG-RAN 48 may transmit a Reject message to the UE without executing the processing in Step S13 and the following processing.

On the other hand, even in a case in which it is determined in Step S12 that at least one of the condition that the algorithm information used for the encryption and the integrity protection processing executed in the UE does not coincide with that executed in the NG-RAN 48 and the condition that the UE is not allowed to be connected to the NextGen System or the core network is satisfied, the NG-RAN 48 may continue processing in Step S13 and the following processing. In this case, the SEAF 43 may continue the Attach Procedure so as to connect the UE to, for example, a predetermined core network (default core network), not to a core network to which the UE requests connection.

When it is determined in Step S12 that the algorithm information used for the encryption and the integrity protection processing executed in the UE coincides with that executed in the NG-RAN 48 and at the same time the UE is allowed to be connected to the NextGen System or the core network, the NG-RAN 48 continues the Attach Procedure in such a way as to allow the UE to be connected to the core network to which the UE requests connection.

As described above, the NG-RAN 48 checks the UE Security Capabilities and the Subscription regarding the UE, whereby it is possible to introduce the Attach Procedure considering the NextGen System in which the core network is partitioned by network slicing.

Further, the NG-RAN 48 may transmit the Attach Request message to the SEAF 43 via the MM entity or transmit the Attach Request message to the SEAF 43 via the SCMF 44.

### (Third Example Embodiment)

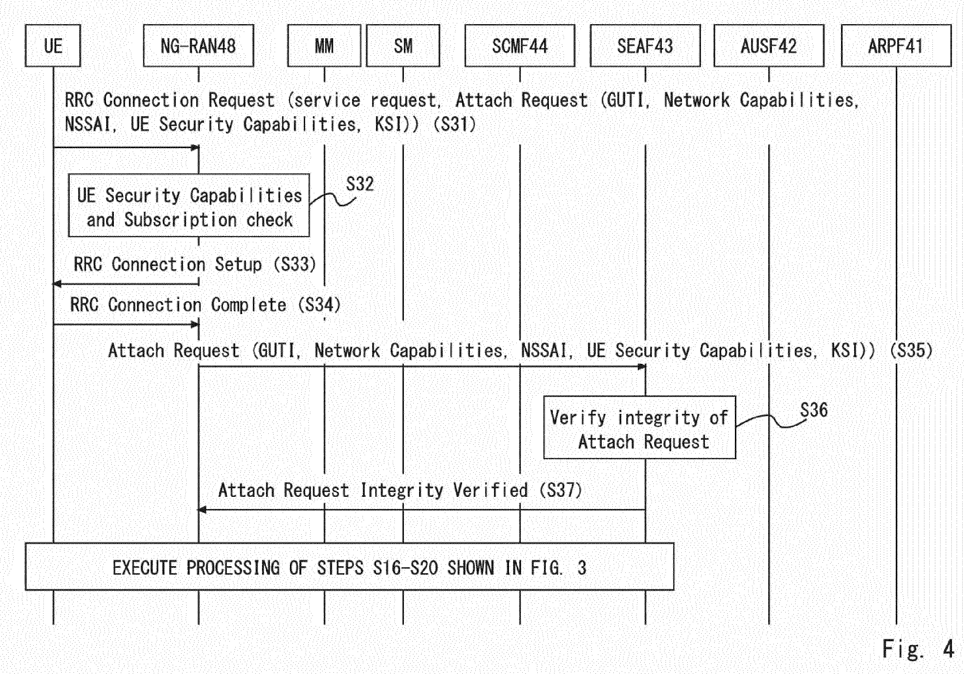

Referring next to Fig. 4, an Attach Procedure in a NextGen System according to a third example embodiment will be explained. In Fig. 4, it is assumed that the NG-RAN 48 does not retain the security key K_{AN}.

Since Step S31 is similar to Step S11 in Fig. 3, the detailed descriptions thereof will be omitted. Next, the NG-RAN 48 checks the UE Security Capabilities and the Subscription regarding the UE (S32). Note that the NG-RAN 48 does not retain the security key K_{AN}. Therefore, the NG-RAN 48 does not execute the integrity protection processing of the Attach Request message included in the RRC Connection Request message, and forwards the message to the SEAF 43.

Since Steps S33-S35 are similar to Steps S13-S15 in Fig. 3, the detailed descriptions thereof will be omitted.

Next, the SEAF 43 verifies or checks integrity of the Attach Request message. It is assumed that the SEAF 43 retains the security key K regarding the UE. The security key K retained by the SEAF 43 may be the security key K_{AN} or the security key K_{SEAF}. It is assumed that the UE also retains a key similar to the security key K_{AN} or the security key K_{SEAF} retained by the SEAF 43. The SEAF 43 performs integrity protection processing of the Attach Request message using the retained security key K.

Next, when the integrity of the Attach Request message has been confirmed, the SEAF 43 transmits an Attach Request Integrity Verified message to the NG-RAN 48 (S37). After Step S37, processing similar to that shown in Steps S16-S20 in Fig. 3 is performed.

In Step S35, the NG-RAN 48 may transmit the Attach Request message to the SEAF 43 via the MM entity or transmit the Attach Request message to the SEAF 43 via the SCMF 44. Further, the verification of the integrity in Step S36 may be executed either in the SCMF 44 or in the ARPF 41 (The verification of the integrity of the Attach Request message can be done at the SCMF 44 or ARPF 41).

As described above, even in a case in which the NG-RAN 48 does not retain the security key K, it is possible to verify or check the integrity of the Attach Request message in the entity arranged on the side of the core network.

### (Fourth Example Embodiment)

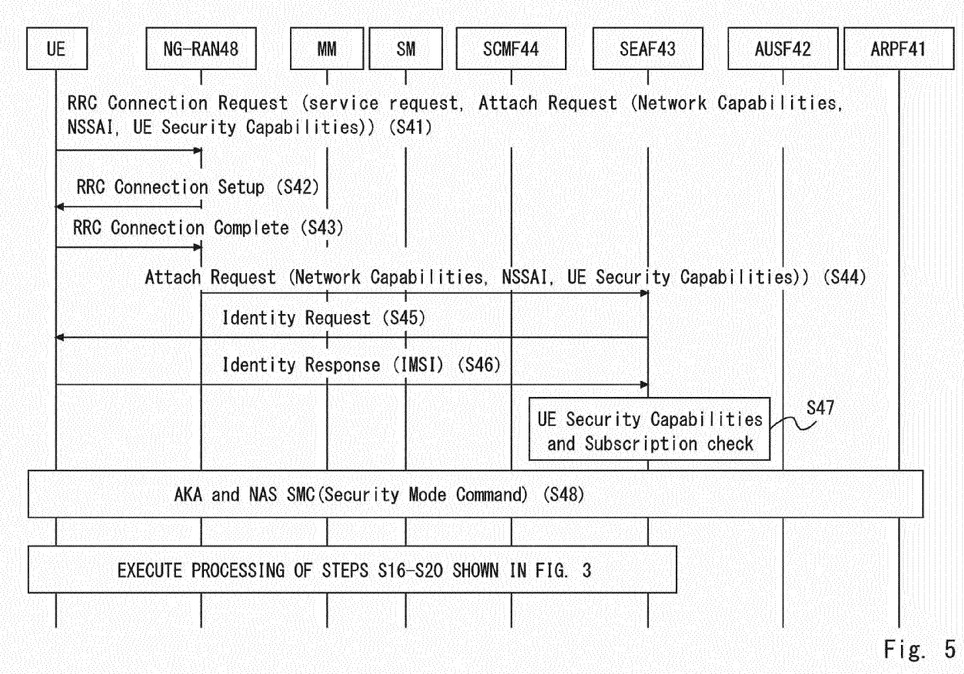

Referring next to Fig. 5, an Attach Procedure in a NextGen System according to a fourth example embodiment will be explained. In Fig. 5, it is assumed that the UE, the NG-RAN 48, and the SEAF 43 do not retain the security key K.

First, the UE transmits the RRC Connection Request message to the NG-RAN 48 (S41). The Attach Request message is piggy-backed within the RRC Connection Request message. The Attach Request message includes, as parameters, the Network capability, the NSSAI, and the UE Security Capabilities. It is assumed, however, that the Attach Request message does not include the Globally Unique Temporary UEIdentity (GUTI) and the KSI temporarily allocated to the UE.

Next, the NG-RAN 48 transmits the RRC Connection Setup message to the UE in response to the RRC Connection Request message (S42). Next, the UE transmits the RRC Connection Complete message to the NG-RAN 48 in order to notify the NG-RAN 48 that it has received the RRC Connection Setup message (S43).

Next, the NG-RAN 48 transmits the Attach Request message to the SEAF 43 (S44). The Attach Request message includes the Network capability, the NSSAI, and the UE Security Capabilities. It is assumed, however, that the Attach Request message does not include the GUTI and the KSI temporarily allocated to the UE.

Next, the SEAF 43 transmits an Identity Request message to the UE in order to acquire the identification information regarding the UE (S45). Next, the UE transmits an Identity Response message including IMSI, which is identification information of itself, to the SEAF 43 (S46).

Next, the SEAF 43 checks the UE Security Capabilities and the Subscription regarding the UE (S47). Next, in order to establish the security context between the UE and the SEAF 43, Authentication and Key Agreement (AKA) and Non-Access Stratum (NAS) Security Mode Command (SMC) are executed (S48). The AKA and NAS SMC are executed in the UE and the SEAF 43, whereby the security key K is derived in the UE and the SEAF 43.

As the AKA and the NAS SMC, a Key Derivation Function (KDF) may be, for example, executed in the UE and the SEAF 43. In the KDF, for example, the NSSAI is used as an input parameter. As a result of the execution of the KDF in the UE, the security key K and a Response (RES) are derived. Further, as a result of the execution of the KDF in the SEAF 43, the security key K and an Expected Response (XRES) are derived. When the RES coincides with the XRES, it means that the UE has derived a security key K the same as the security key K derived in the SEAF 43.

After Step S48, processing similar to that shown in Steps S16-S20 in Fig. 3 is executed.

In Step S44, the NG-RAN 48 may transmit the Attach Request message to the SEAF 43 via the MM entity or transmit the Attach Request message to the SEAF 43 via the SCMF 44. Further, the check of the UE Security Capabilities and the Subscription regarding the UE in Step S47 may be executed either in the SCMF 44 or in the ARPF 41.

As described above, even in a case in which each of the entities arranged in the UE, the NG-RAN 48, and the core network does not retain the security key K, the security key K is derived in the UE and the SEAF 43, whereby it is possible to verify or check the integrity of the Attach Request message.

### (Fifth Example Embodiment)

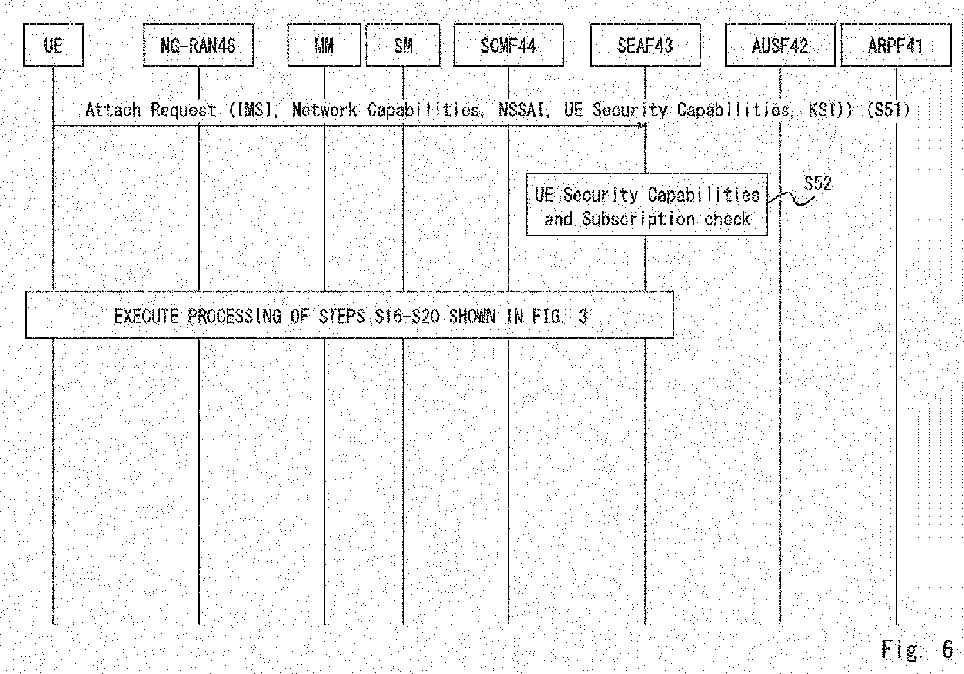

Referring next to Figs. 6-8, a flow of processing of checking the UE Security Capabilities and the Subscription in the entity on the side of the core network will be explained.

In Fig. 6, the Attach Request message that the UE transmits to the SEAF 43 includes, besides the NSSAI and the UE Security Capabilities, the IMSI (S51). Upon receiving the Attach Request message including the IMSI, the Network Capabilities, the KSI, the NSSAI, and the UE Security Capabilities, the SEAF 43 checks the UE Security Capabilities and the Subscription regarding the UE (S52). After Step S52, processing similar to that shown in Steps S16-S20 in Fig. 3 is performed. In Fig. 5, after the SEAF 43 has received the Attach Request message, the SEAF 43 transmits the Identity Request message to the UE and receives the Identity Response message in which the IMSI of the UE is configured. On the other hand, the processing shown in Fig. 6 is different from that shown in Fig. 5 in that the SEAF 43 does not transmit the Identity Request message to the UE since the Attach Request message transmitted by the UE includes the IMSI.

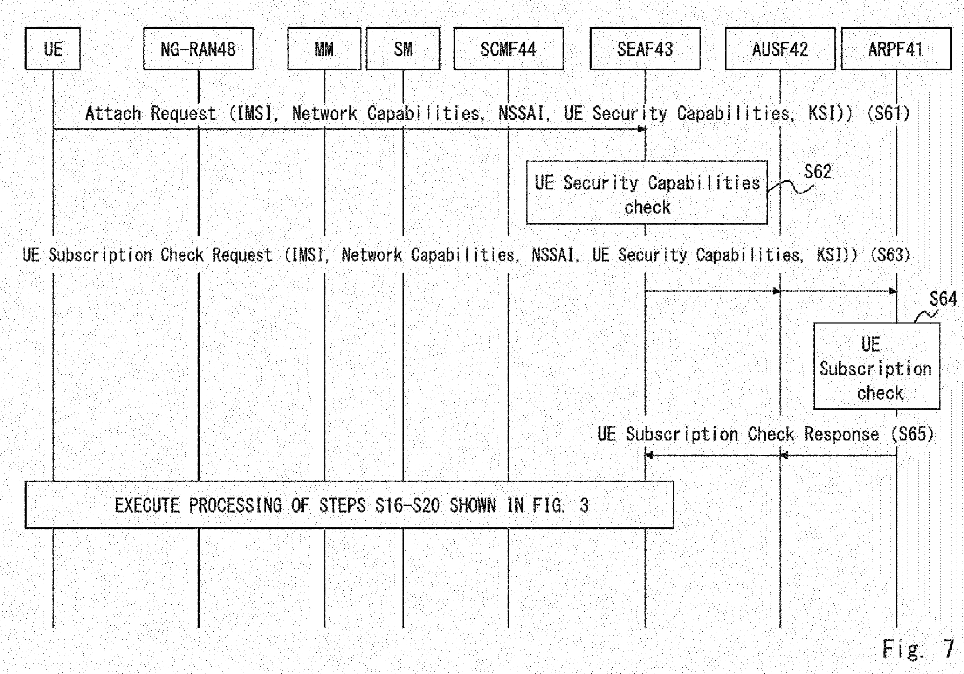

Referring next to Fig. 7, Fig. 7 shows that the check of the UE Security Capabilities and the check of the Subscription are performed in entities different from each other. Specifically, upon receiving a message the same as the Attach Request message transmitted in Step S51 in Fig. 6, the SEAF 43 checks the UE Security Capabilities (S62). Next, the SEAF 43 transmits a UE Subscription Check Request message to the ARPF 41 via the AUSF 42 in order to request check of the Subscription. The UE Subscription Check Request message includes information the same as the Attach Request message transmitted in Step S61.

Upon receiving the UE Subscription Check Request message, the ARPF 41 checks the Subscription (S64). Next, upon completion of the check of the Subscription, the ARPF 41 transmits a UE Subscription Check Response message to the SEAF 43 via the AUSF 42 (S65). After the SEAF 43 has received the UE Subscription Check Response message, processing similar to that in Steps S16-S20 shown in Fig. 3 is performed.

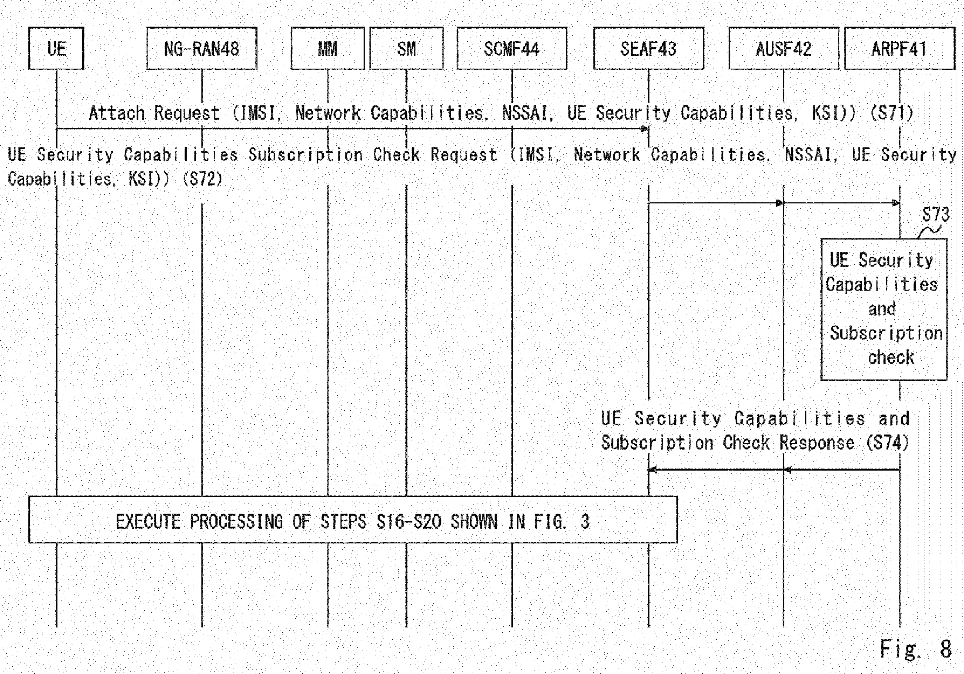

Referring next to Fig. 8, Fig. 8 shows that the check of the UE Security Capabilities and the Subscription is performed in the ARPF 41. Specifically, first, the SEAF 43 receives a message the same as the Attach Request message transmitted in Step S51 in Fig. 6. Upon receiving the Attach Request message, the SEAF 43 transmits the UE Security Capabilities and Subscription Check Response message to the ARPF 41 via the AUSF 42 in order to request check of the UE Security Capabilities and the Subscription (S74).

Next, the ARPF 41 checks the UE Security Capabilities and the Subscription regarding the UE (S73). Next, after the ARPF 41 completes the check of the UE Security Capabilities and the Subscription, the ARPF 41 transmits the UE Security Capabilities and Subscription Check Response message to the SEAF 43 via the AUSF 42 (S74). After the SEAF 43 has received the UE Subscription Check Response message, processing similar to that in Steps S16-S20 shown in Fig. 3 is executed.

As described above, the check of the UE Security Capabilities and the Subscription may be executed either in one entity arranged in the core network or in a plurality of entities in a distributed manner.

### (Sixth Example Embodiment)

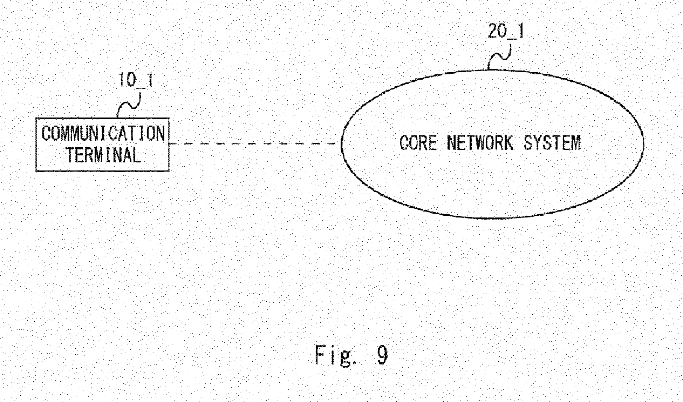

Referring next to Fig. 9, a configuration example of a communication system according to a sixth example embodiment will be explained. The communication system shown in Fig. 9 includes a communication terminal 10_1 and a core network system 20_1.

The node apparatus (it may be referred to as a core network apparatus or a security apparatus) that composes the communication terminal 10_1 and the core network system 20_1 may be a computer apparatus operated by a processor executing a program stored in a memory. The processor may be, for example, a microprocessor, a Micro Processing Unit (MPU), or a Central Processing Unit (CPU). The memory may be a volatile memory or a nonvolatile memory, or may be composed of a combination of the volatile memory and the nonvolatile memory. The processor executes one or more programs including instructions for causing the computer to execute the algorithms described with reference to the following drawings.

The communication terminal 10_1 may be, for example, a mobile telephone terminal, a smartphone terminal, or an IoT terminal.

The core network system 20_1 is a communication system included in the mobile network. The core network system 20_1 performs, for example, session management and mobility management of the communication terminal 10_1. Further, the core network system 20_1 executes a Non Access Stratum (NAS) Security Procedure and a U-Plane (UP) Security Procedure regarding the communication terminal 10_1.

The core network system 20_1 generates security keys (Keys) using Network Slice Selection Assistance Information (NSSAI) and User Equipment (UE) Security Capabilities in a NAS Security Procedure (it may be referred to as a NAS Security Mode Command (SMC) procedure).

The NSSAI is, for example, information for identifying a core network system that provides a service used by the communication terminal 10_1. It is assumed that the network slicing is applied in the core network system included in the mobile network 30 and the core network system is partitioned for each of the services to be provided. The partitioned core network system may be referred to as a network slice.

The UE Security Capabilities may be a set of identification information that corresponds to algorithm information used for the encryption and the integrity protection processing executed in the UE, which is a communication terminal. (The set of identifiers corresponding to the ciphering and integrity algorithms implemented in the UE).

Further, the core network system 20_1 transmits information associated with the NSSAI and the UE Security Capabilities used to generate the security keys to the communication terminal 10_1.

The communication terminal 10_1 generates the security keys regarding the NAS Security using the information associated with the NSSAI and the UE Security Capabilities transmitted from the core network system 20_1. The security keys generated by the communication terminal 10_1 are similar to the security keys generated in the core network system 20_1.

As described above, by using the communication system shown in Fig. 9, the communication terminal 10_1 is able to generate the security keys using the NSSAI. Accordingly, the communication terminal 10_1 is able to generate the security keys used for the connection to the core network system that provides a desired service among the partitioned core network systems in which the network slicing is applied.

### (Seventh Example Embodiment)

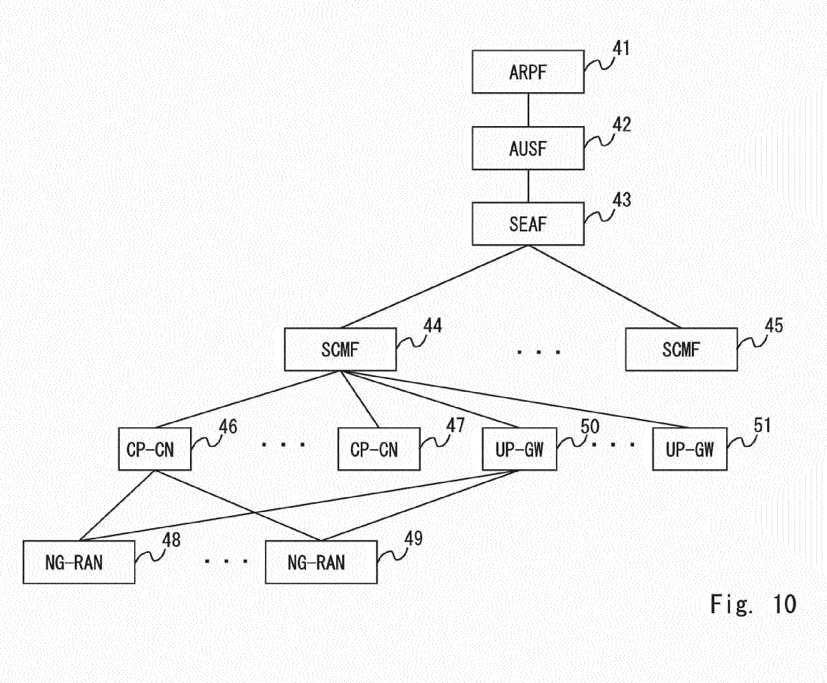

Referring next to Fig. 10, a configuration example of a communication system according to a seventh example embodiment will be explained. The communication system shown in Fig. 10 indicates a NextGen System. The communication system shown in Fig. 10 includes an ARPF entity 41 (hereinafter it will be referred to as an ARPF 41), an AUSF entity 42 (hereinafter it will be referred to as an AUSF 42), an SEAF entity 43 (hereinafter it will be referred to as an SEAF 43), an SCMF entity 44 (hereinafter it will be referred to as an SCMF 44), an SCMF 45, a C-Plane Core Network (CP-CN) entity 46 (hereinafter it will be referred to as a CP-CN 46), a CP-CN 47, an NG-RAN entity 48 (hereinafter it will be referred to as an NG-RAN 48), an NG-RAN 49, a U-Plane (UP)-Gateway (GW) 50, and a UP-GW 51. Each of the CP-CN 46 and the CP-CN 47 includes an MM entity that executes Mobility Management and an SM entity that executes Session Management.

Specifically, the MM may be, for example, to register UE or a user who manages the UE in a mobile network, support reachability for enabling mobile terminated communication, detect unreachable UE, allocate network functionalities regarding Control (C)-Plane and User (U)-Plane, or limit mobility.

Further, the SM is to configure IP connectivity or non-IP connectivity for UE. In other words, the SM may be to manage or control connectivity of the U-Plane.

The ARPF 41, the AUSF 42, the SEAF 43, the SCMF 44, the SCMF 45, the CP-CN 46, the CP-CN 47, the UP-GW 50, and the UP-GW 51 form a core network. Each of the entities arranged in the core network may be referred to as a core network apparatus or a security apparatus. The NG-RAN 48 and the NG-RAN 49 form a radio access network. The NG-RAN 48 may be, for example, a base station that is used in the NextGen System.

Each of the entities shown in Fig. 10 may include a plurality of functionalities. For example, while the ARPF 41 is an entity different from the AUSF 42 in Fig. 10, one entity that executes the ARPF and the AUSF may instead be used.

The ARPF entity is a node apparatus that executes the ARPF. The AUSF entity is a node apparatus that executes the AUSF. The ARPF and the AUSF are, for example, functionalities for executing authentication processing regarding whether the User Equipment (UE) that corresponds to the communication terminal 10 can be connected to the NextGen System. The ARPF 41 and the AUSF 42 generate security keys used for the authentication processing and retains the generated security keys.

The SEAF and the SCMF are functionalities for executing authentication processing regarding whether the UE can be connected to the network sliced core network. Each of the SEAF entity and the SCMF entity may be referred to as a security apparatus.

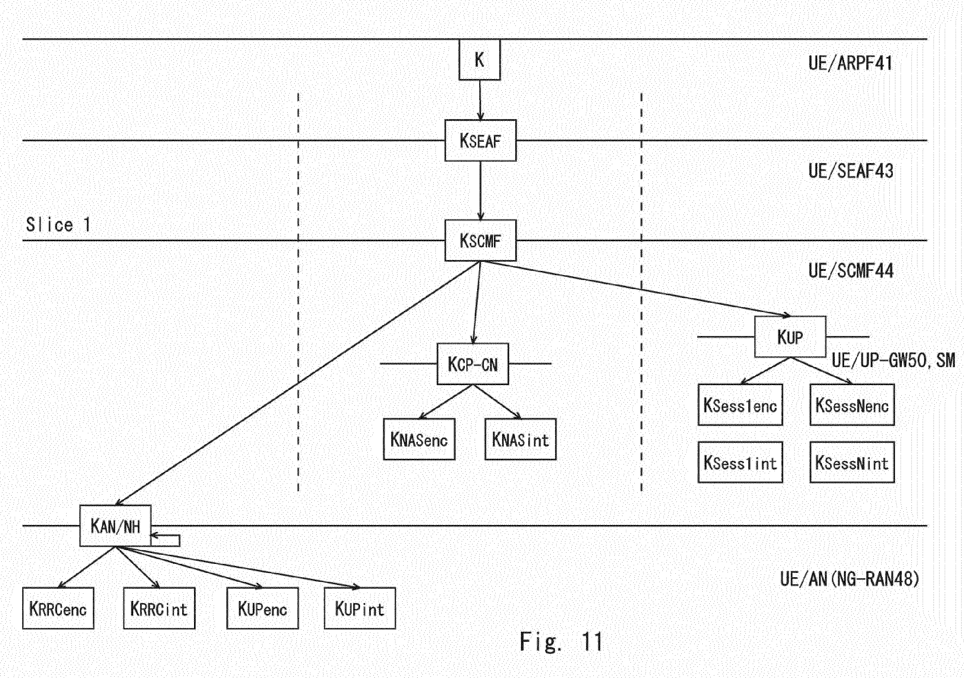

Referring next to Fig. 11, a hierarchical structure of the security keys will be explained. The SEAF 43 derives the security key K_{SCMF} from the security key K_{SEAF} received from the ARPF 41 via the AUSF 42. It can be also said that to derive something means, for example, to acquire or generate something. The SEAF 43 transmits the security key K_{SCMF} to the SCMF 44. The SCMF 44 derives the security key K_{CP-CN} and the security key K_{UP} from the security key K_{SCMF} received from the SEAF 43. The SCMF 44 transmits the security key K_{UP} to the UP-GW 50.

Further, the SCMF 44 generates a key K_{NASenc} used for the encryption of the NAS message and a key K_{NASint} used for the integrity protection processing of the NAS message from the security key K_{CP-CN}.

The UP-GW 50 generates a key K_{Sess1enc} used for the encryption of the U-Plane data and a key K_{Sess1int} used for the integrity protection processing of the NAS message from the security key K_{UP}. Sesslenc indicates encryption of the U-Plane data transmitted in a session identified to be a session 1. Sesslint indicates integrity protection processing of the U-Plane data transmitted in the session identified to be the session 1. A security key used for a plurality of times of encryption and a security key used for a plurality of times of integrity protection processing may be generated from a security key Kᵤₚ. In Fig. 3, a security key K_{SessNenc} and a security key K_{SessNint} are shown as the security keys used for the U-Plane data transmitted in a desired session N.

The NG-RAN 48 receives the security key K_{AN} derived by the SCMF 44 or the SEAF 43. The NG-RAN 48 generates a security key K_{RRCenc} and a security key K_{RRCint} used for the encryption and the integrity protection processing of the RRC message from the security key K_{AN}. The NG-RAN 48 further generates a security key K_{UPenc} and a security key K_{UPint} used for the encryption and the integrity protection processing of the U-Plane data from the security key K_{AN}.

Each of the entities that form the NextGen System executes security processing such as authentication processing of the UE and integrity protection processing of the message using the received security key K. Further, the security key K may be referred to as a security context.

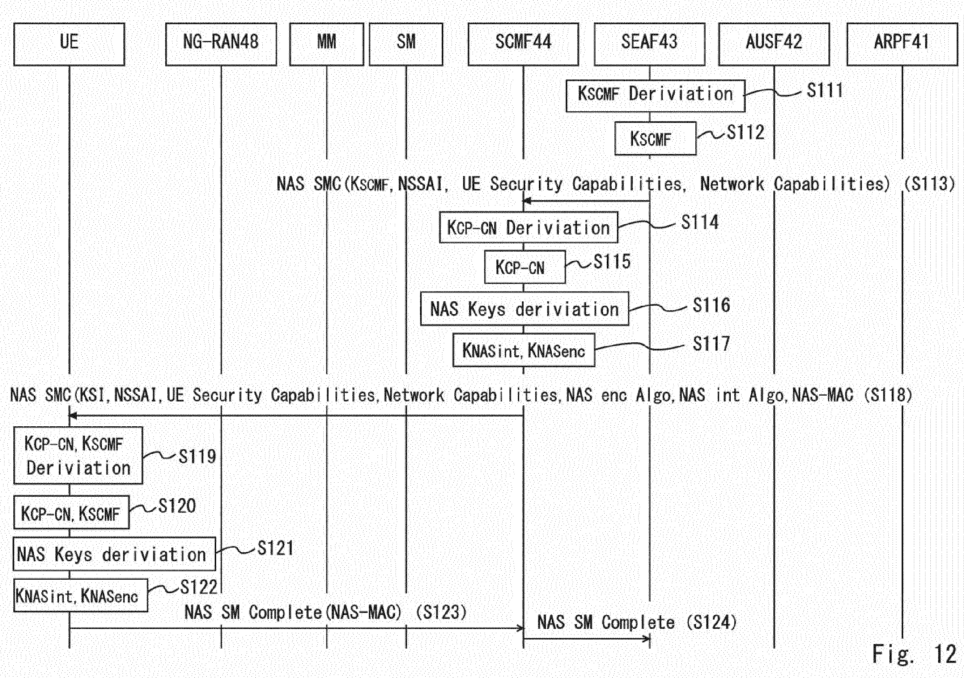

Referring next to Fig. 12, the NAS Security Procedure in the NextGen System will be explained. First, the SEAF 43 derives the security key K_{SCMF} from the retained security key K_{SEAF} (S111). The security key K_{SCMF} may be referred to as a slice anchor key. (The SEAF derives the K_{SCMF}, the slice anchor key.) Next, after the SEAF 43 has derived the security key K_{SCMF} (S112), the SEAF 43 transmits a NAS Security Mode Command (SMC) message to the SCMF 44 (S113). The NAS SMC message includes the security key K_{SCMF}, the NSSAI, the UE Security Capabilities, and the Network Capabilities.

Next, the SCMF 44 derives the security key K_{CP-CN} from the received security key K_{SCMF} (S114, S115). Next, the SCMF 44 selects the algorithm for the integrity protection and the encryption and derives the NAS key from the security key K_{CP-CN} (S116). Specifically, the NAS key may be the security key K_{NASint} used for the integrity protection processing and the security key K_{NASenc} used for the encryption (S117).

Next, the SCMF 44 forwards the NAS SMC message received in Step S13 to the UE (S118). The NAS SMC message includes, as parameters, the Key Set Identifier (KSI), the NSSAI, the UE Security Capabilities, the Network Capabilities, NAS enc Algo, NAS int Algo, and a NAS-Message Authentication Code (MAC). The NAS SMC message is information associated with the NSSAI and the UE Security Capabilities in the sixth example embodiment. The NAS enc Algo is an algorithm for the encryption and the NAS int Algo is an algorithm for the integrity protection.

Next, the UE derives the security key K_{SCMF} and the security key K_{CP-CN} (S119, S120). Next, the UE derives the NAS key from the security key K_{CP-CN} in order to use the algorithm for the integrity protection and the encryption received in Step S118 (S121). Specifically, the NAS key may be the security key K_{NASint} used for the integrity protection processing and the security key K_{NASenc} used for the encryption (S122).

Next, the UE transmits a NAS Security Mode (SM) Complete message including the NAS-MAC to the SCMF 44 (S123). The SCMF 44 forwards the received NAS SM Complete message to the SEAF 43 (S124).

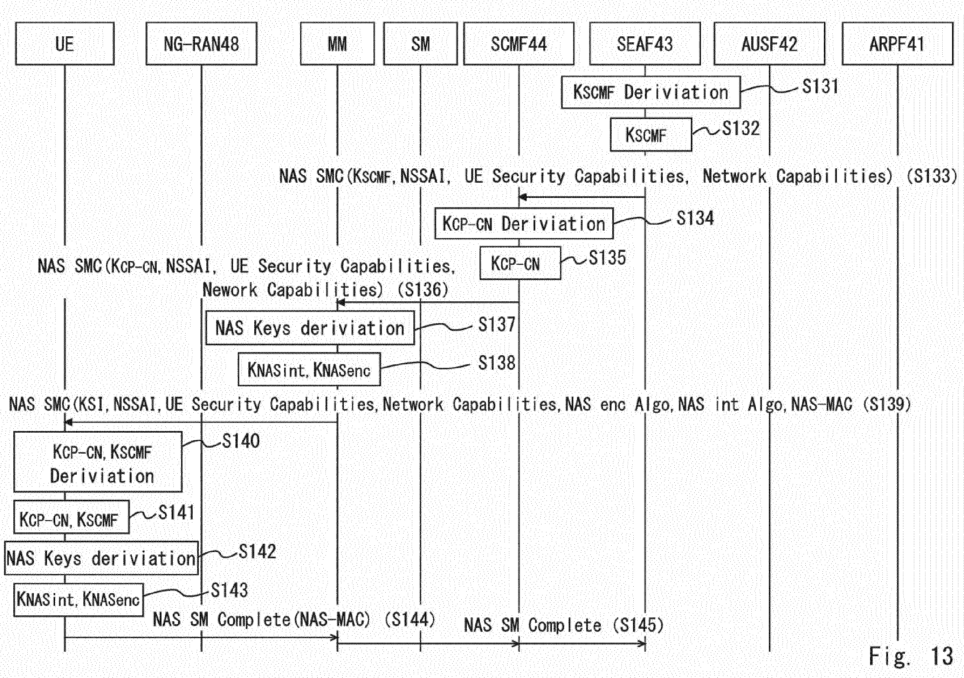

Referring next to Fig. 13, a NAS Security Procedure different from that shown in Fig. 12 will be explained. Since Steps S131-S135 are similar to Steps S111-S115 in Fig. 12, the descriptions thereof will be omitted.

After the SCMF 44 has derived the security key K_{CP-CN} in Step S135, the SCMF 44 transmits the NAS SMC message to the MM entity (hereinafter it will be referred to as an MM) (S136). The MM corresponds to the CP-CN 46. The NAS SMC message includes the security key K_{CP-CN}, the NSSAI, the UE Security Capabilities, and the Network Capabilities. Since Steps S137 and S138 are similar to Steps S116 and S117 in Fig. 12, the descriptions thereof will be omitted. Note that Steps S137 and S138 are executed by the MM and Steps S116 and S117 in Fig. 12 are executed by the SCMF 44.

Further, since Steps S139-S143 are similar to Steps S118-S122 in Fig. 12, the descriptions thereof will be omitted. After the UE has derived the security key K_{NASint} and the security key K_{NASenc} in Step S143, the UE transmits the NAS SM Complete message including the NAS-MAC to the MM (S144). Further, the MM forwards the NAS SM Complete message to the SCMF 44 and the SCMF 44 forwards the NAS SM Complete message to the SEAF 43 (S145).

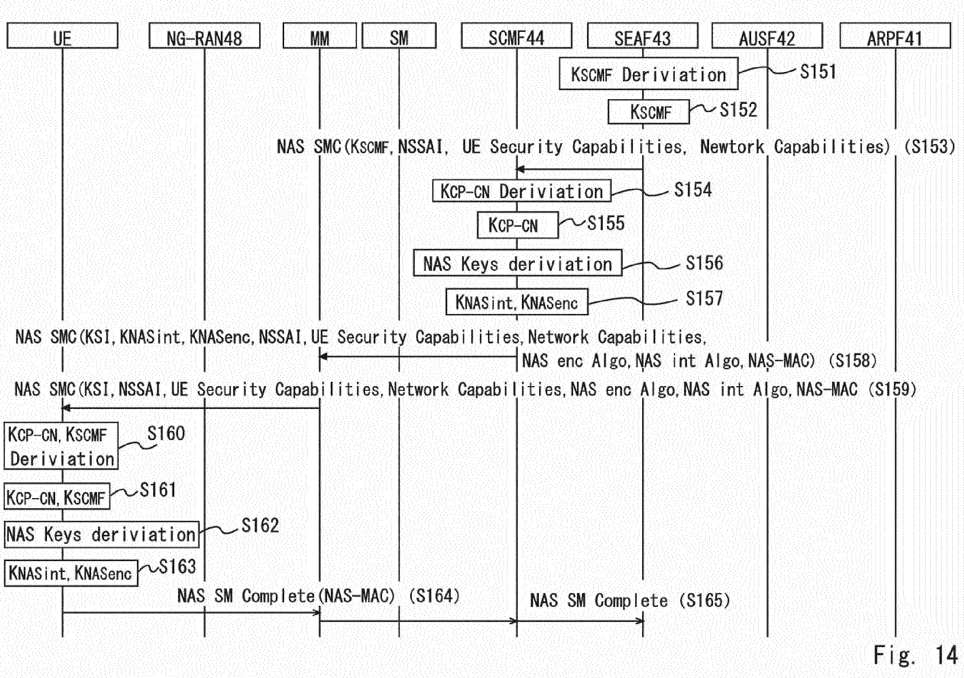

Referring next to Fig. 14, a NAS Security Procedure that is different from those shown in Figs. 12 and 13 will be explained. Since Steps S151-S157 are similar to Steps S111-S117 shown in Fig. 12, the descriptions thereof will be omitted.

Next, after the SCMF 44 has derived the security key K_{NASint} and the security key K_{NASenc} in Step S157, the SCMF 44 transmits the NAS SMC message to the MM (S158). The NAS SMC message includes the KSI, the security key K_{NASint}, the security key K_{NASenc}, the NSSAI, the UE Security Capabilities, the Network Capabilities, the NAS enc Algo, the NAS int Algo, and the NAS-MAC.

Since Steps S159-S165 are similar to Steps S139-S145 shown in Fig. 13, the descriptions thereof will be omitted.

As described above, by executing the NAS Security Procedure shown in Figs. 12-14, it is possible to share the security key K_{NASint} used for the encryption and the integrity protection processing of the NAS message and the security key K_{NASenc} used for the encryption between the UE and an apparatus arranged in the core network.

### (Eighth Example Embodiment)

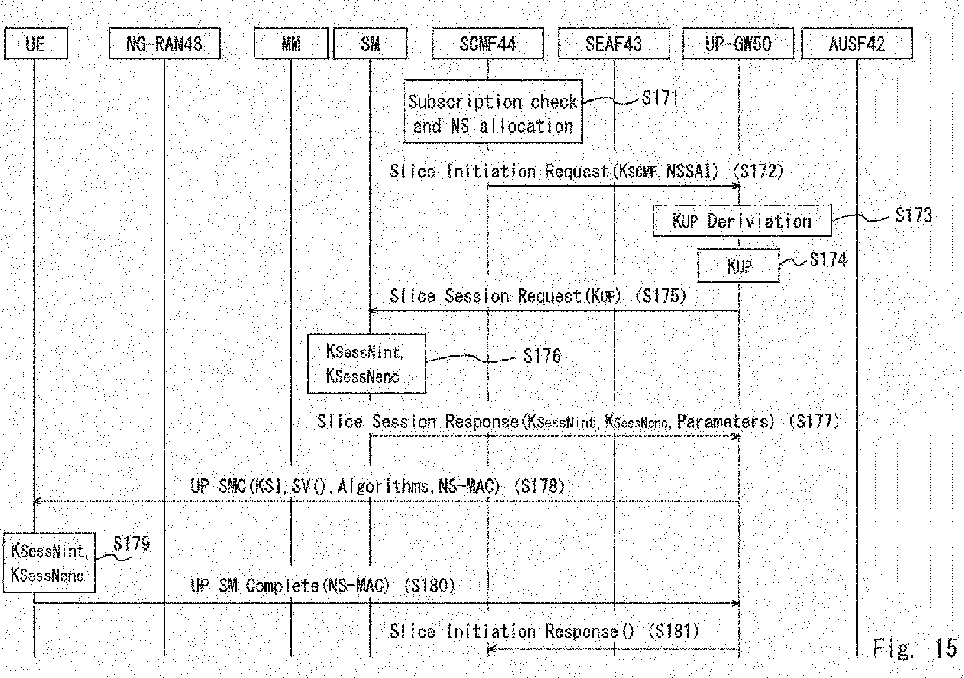

Referring next to Fig. 15, a UP Security Procedure according to an eighth example embodiment will be explained. The UP Security Procedure relates to security processing when U-Plane data is transmitted.

First, the SCMF 44 executes the Subscription check and Network Slice (NS) allocation regarding the UE (S171). The Subscription check may indicate, for example, to determine whether it is possible to allow the UE to be connected to the network slice desired by the UE. The network slice allocation may indicate to allocate, to the UE, the network slice to which the UE is allowed to be connected.

Next, the SCMF 44 transmits a Slice Initiation Request message to the UP-GW 50 (S172). The Slice Initiation Request message includes the security key K_{SCMF} and the NSSAI. The UP-GW 50 may be, for example, a UP-GW arranged in the network slice allocated by the SCMF 44.

Next, the UP-GW 50 derives the security key K_{UP} from the received security key K_{SCMF} (S173, S174). Next, the UP-GW 50 transmits a Slice Session Request message to an SM entity (hereinafter it will be referred to as an SM) (S175). The SM corresponds to, for example, the CP-CN 46. The Slice Session Request message includes the security key K_{UP}.

Next, the SM selects the algorithm for the integrity protection and the encryption and derives the session key from the security key K_{UP} (S176). The session key may be, for example, the security key K_{SessNint} used for the integrity protection and the security key K_{SessNenc} used for the encryption.

Next, the SM transmits a Slice Session Response message to the UP-GW 50 (S177). The Slice Session Response message includes the security key K_{SessNint} and the security key K_{SessNenc}.

Next, the UP-GW 50 transmits the UP SMC message to the UE (S178). The UP SMC message includes the KSI, SV(), Algorithms, and the NS-MAC. The SV is an abbreviation for a Security Vector. The Algorithms are algorithms for the integrity protection and the encryption.

Next, the UE derives the security key K_{UP} from the retained security key K_{SCMF}. Further, the UE derives the security key K_{SessNint} and the security key K_{SessNenc} from the security key K_{UP} in order to use the Algorithms received in Step S78 (S179).

Next, the UE transmits the UP Security Mode (SM) Complete message including the NS-MAC to the UP-GW 50 (S180). The UP-GW 50 checks the value of the NS-MAC and performs authentication of the UP SM Complete message. Next, the UP-GW 50 transmits a Slice Initiation Response message to the SCMF 44 (S181).

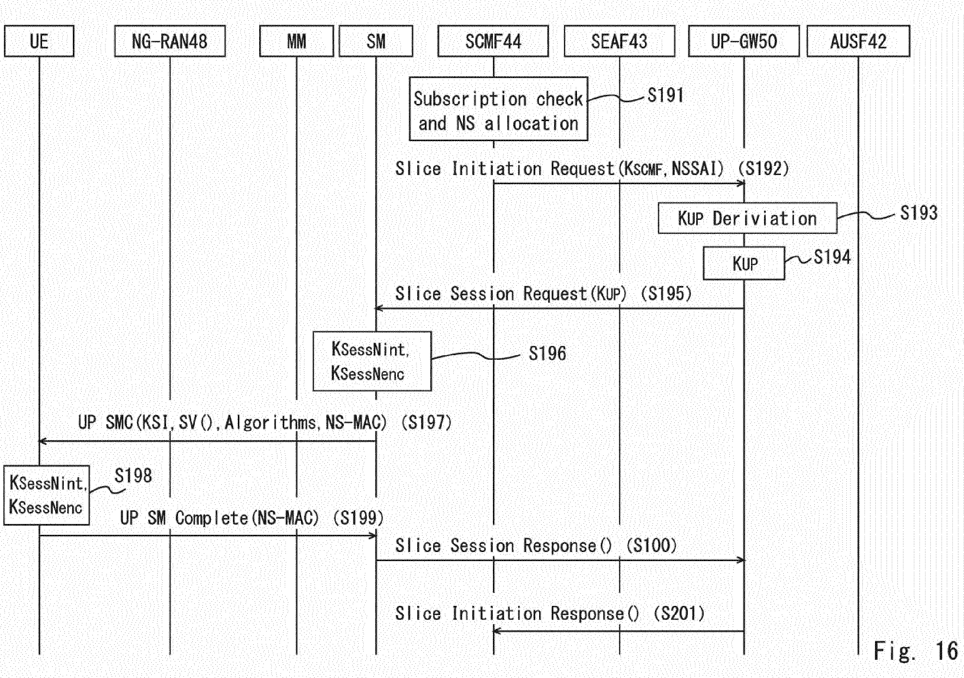

Referring next to Fig. 16, a UP Security Procedure different from that in Fig. 15 will be explained. Since Steps S191-S196 are similar to Steps S171-S176 in Fig. 15, the descriptions thereof will be omitted.

After the SM has derived the session key from the security key K_{UP} in Step S196, the SM transmits the UP SMC message to the UE (S197). The UP SMC message includes the KSI, the SV(), the Algorithms, and the NS-MAC.

Since Step S198 is similar to Step S179 in Fig. 15, the descriptions thereof will be omitted. After the UE has derived the security key K_{SessNint} and the security key K_{SessNenc} in Step S198, the UE transmits the UP SM Complete message including the NS-MAC (S199).

Next, the SM checks the value of the NS-MAC and performs authentication of the UP SM Complete message. Next, the SM transmits the Slice Session Response message to the UP-GW 50 (S200). Next, the UP-GW 50 transmits the Slice Initiation Response message to the SCMF 44 (S201).

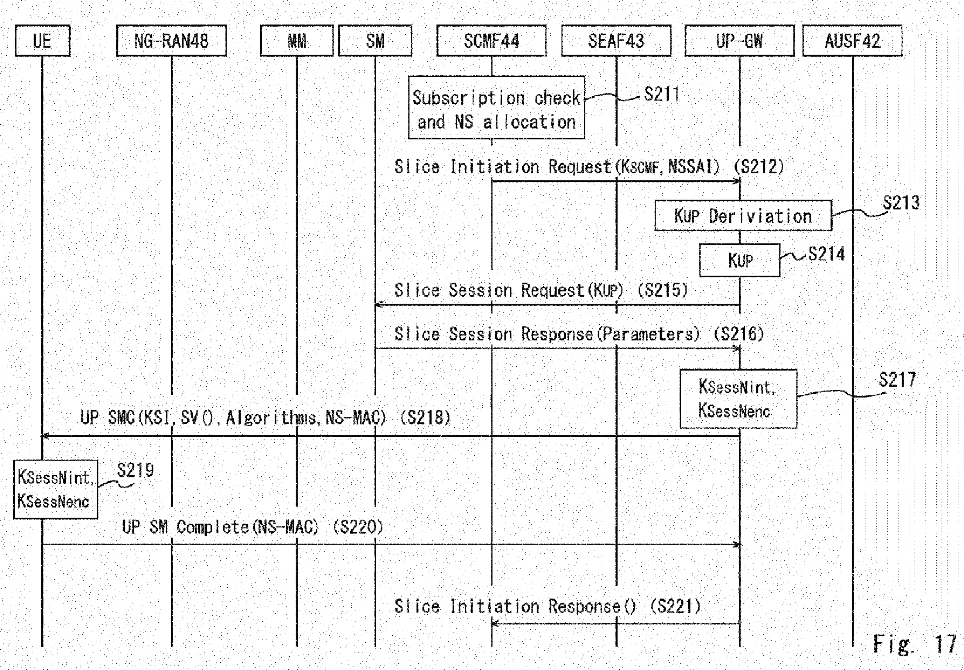

Referring next to Fig. 17, a UP Security Procedure different from those shown in Figs. 15 and 16 will be explained. Since Steps S211-S215 are similar to Steps S171-S175 in Fig. 15, the descriptions thereof will be omitted.

Upon receiving the security key K_{UP} in Step S215, the SM selects the algorithm for the integrity protection and the encryption. Further, the SM transmits the Slice Session Response message that includes the information regarding the algorithm that has been selected as parameters to the UP-GW 50 (S216).

Next, the UP-GW 50 derives the session key based on the algorithm selected in the SM. The session key may be, for example, the security key K_{SessNint} used for the integrity protection and the security key K_{SessNenc} used for the encryption.

Since Steps S218-S221 are similar to Steps S178-S181 in Fig. 15, the detailed descriptions thereof will be omitted.

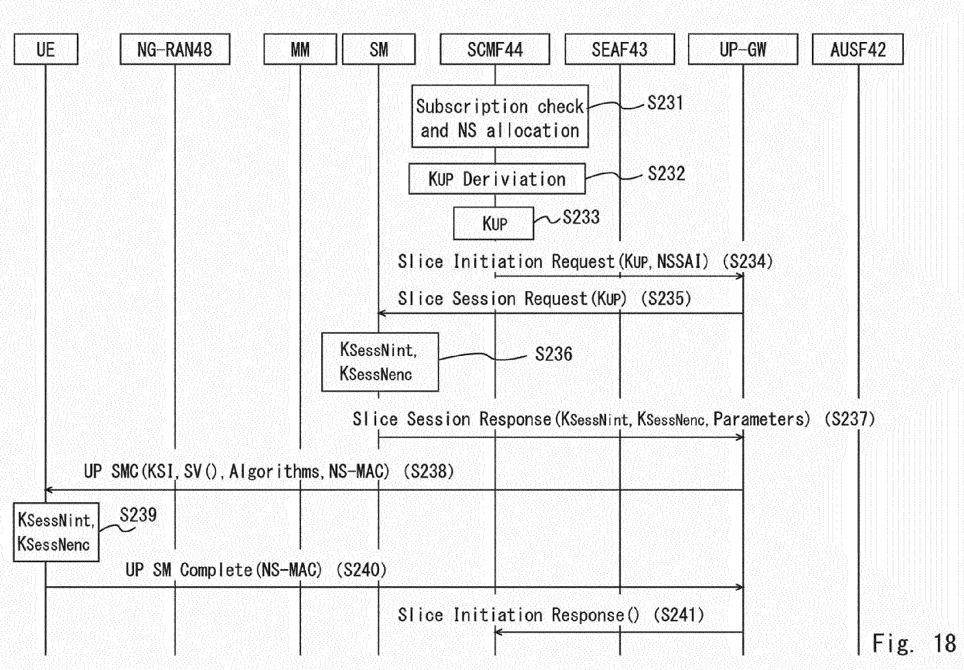

Referring next to Fig. 18, a UP Security Procedure different from those shown in Figs. 15-17 will be explained. Since Step S231 is similar to Step S171 in Fig. 15, the descriptions thereof will be omitted. Next, the SCMF 44 derives the security key K_{UP} from the retained security key K_{SCMF} (S232, S233).

Next, the SCMF 44 transmits the Slice Initiation Request message to the UP-GW 50 (S234). The Slice Initiation Request message includes the security key K_{UP} and the NSSAI. Since Steps S235-S241 are similar to Steps S175-S181 in Fig. 15, the descriptions thereof will be omitted.

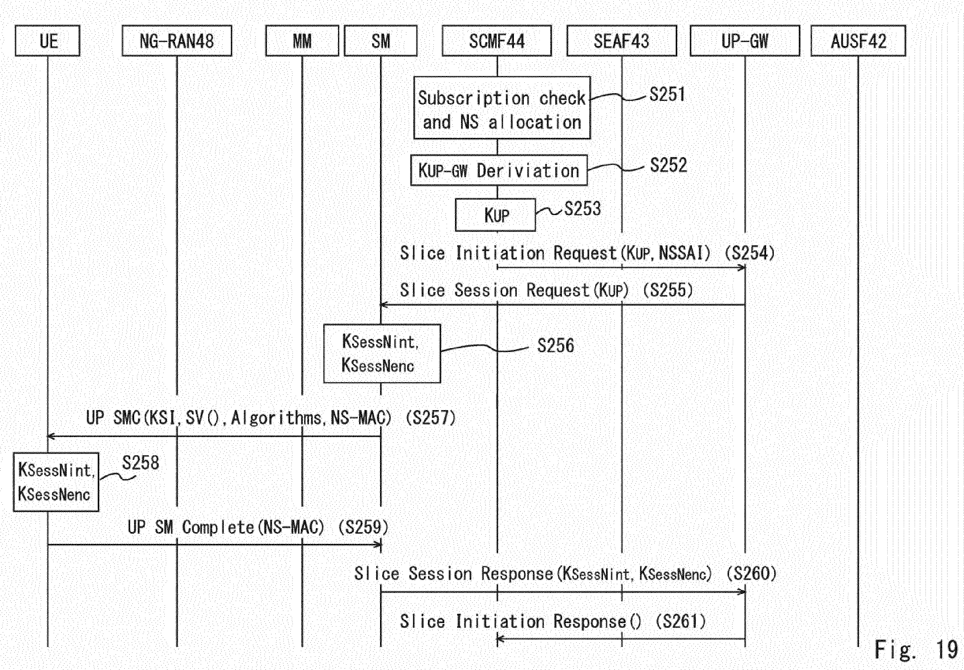

Referring next to Fig. 19, a UP Security Procedure different from those shown in Figs. 15-18 will be explained. Since Steps S251-S256 are similar to Steps S231-S236 in Fig. 18, the descriptions thereof will be omitted. Further, since Steps S257-S261 are similar to Steps S197-S201 in Fig. 16, the descriptions thereof will be omitted.

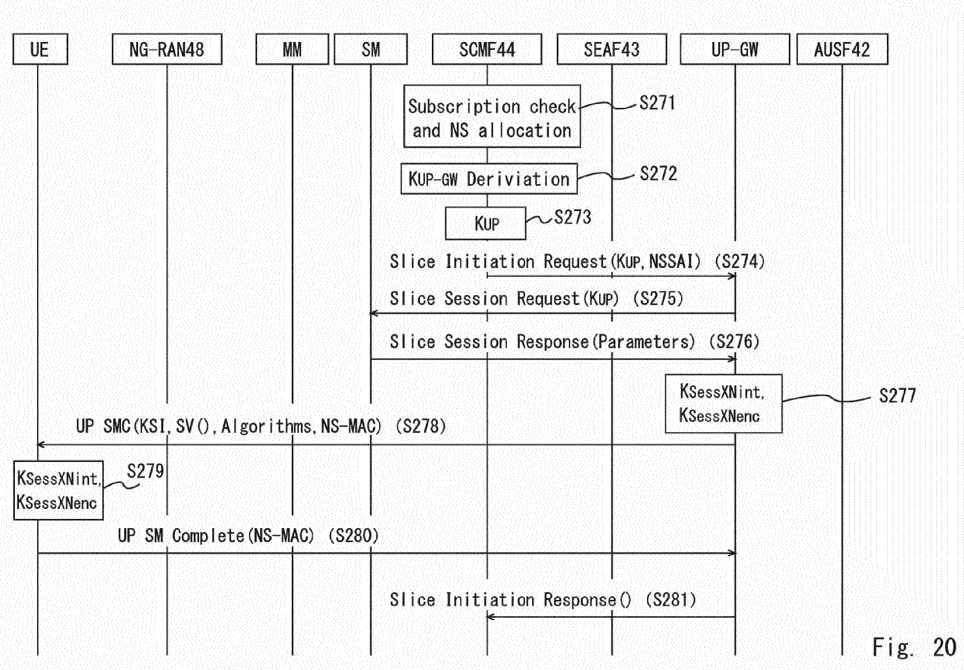

Referring next to Fig. 20, a UP Security Procedure different from those shown in Figs. 15-19 will be explained. Since Steps S271-275 are similar to Steps S231-S235 in Fig. 18, the descriptions thereof will be omitted. Further, since Steps S276-S281 are similar to Steps S216-S221 in Fig. 17, the descriptions thereof will be omitted.

As described above, by executing the UP Security Procedure shown in Figs. 15-20, it is possible to share a security key K_{Sessint} used for the encryption and the integrity protection processing of the U-Plane data and a security key K_{Sessenc} used for the encryption between the UE and the apparatus arranged in the core network.

### (Ninth Example Embodiment)

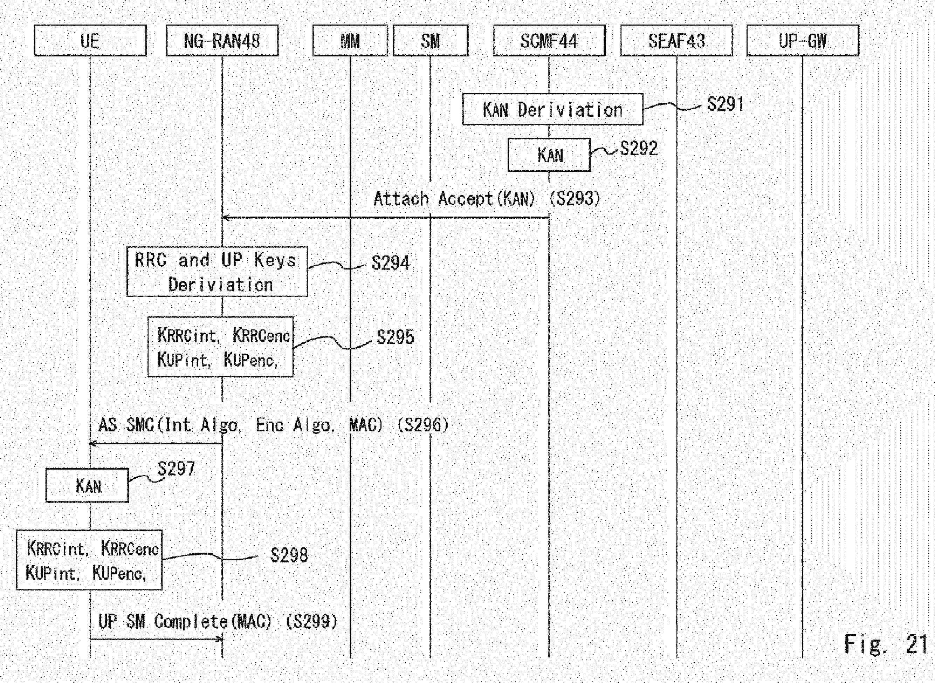

Referring next to Fig. 21, an AS Security Procedure according to a ninth example embodiment will be explained. The AS Security Procedure relates to security processing between the UE and the NG-RAN 48. The AS Security Procedure in Fig. 21 is executed in Attach processing regarding the UE.

First, the SCMF 44 derives the security key K_{AN} from the retained security key K_{SCMF} (S291, S292). Next, the SCMF 44 transmits the Attach Accept message to the SM (S293). The Attach Accept message includes the security key K_{AN}. Next, the NG-RAN 48 derives security keys regarding the RRC message and the U-Plane data from the security key K_{AN} (S294). The security keys regarding the RRC message and the U-Plane data may be, for example, the security key K_{RRCint}, the security key K_{RRCenc}, the security key K_{UPint}, and the security key K_{UPenc} (S295).

Next, the NG-RAN 48 transmits an AS SMC message including the algorithm for integrity protection (Int Algo) and the algorithm for encryption (Enc Algo) of the RRC message and the U-Plane data to the UE (S296).

Next, the UE derives the security key K_{AN} from the retained security key K_{SCMF} (S297). Further, the UE derives the security key K_{RRCint}, the security key K_{RRCenc}, the security key K_{UPint}, and the security key K_{UPenc} from the security key K_{AN} (S298).

Next, the UE transmits the UP SM Complete message to the NG-RAN 48 (S299).

As described above, by executing the AS Security Procedure shown in Fig. 21, it is possible to share the security key K_{RRCint}, the security key K_{RRCenc}, the security key K_{UPint}, and the security key K_{UPenc} between the UE and the apparatus arranged in the core network from the security key K_{AN} used for the encryption and the integrity protection processing of the data transmitted between the UE and the NG-RAN.

### (Tenth Example Embodiment)

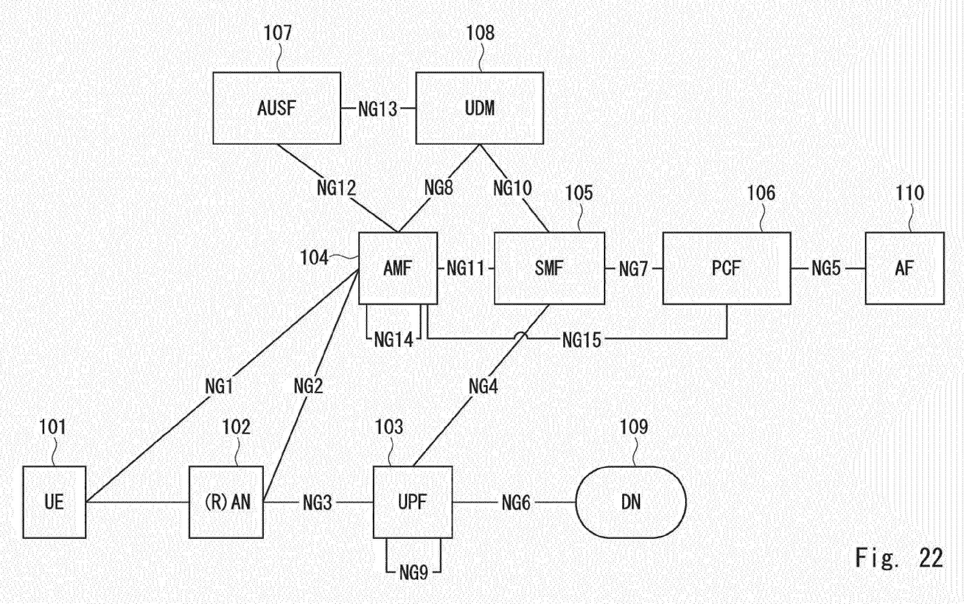

Referring next to Fig. 22, a configuration example of a communication system according to a tenth example embodiment will be explained. The communication system shown in Fig. 22 includes a User Equipment (UE) 101, a Radio (R) Access Network (RAN) 102, a User Plane Function (UPF) entity 103 (hereinafter it will be referred to as a UPF 103), an Access and Mobility Management Function (AMF) entity 104 (hereinafter it will be referred to as an AMF 104), a Session Management Function (SMF) entity 105 (hereinafter it will be referred to as an SMF 105), a Policy Control Function (PCF) entity 106 (hereinafter it will be referred to as a PFC 106), an Authentication Server Function (AUSF) entity 107 (hereinafter it will be referred to as an AUSF 107), a Unified Data Management (UDM) 108, a Data Network (DN) 109, and an Application Function (AF) entity 110 (hereinafter it will be referred to as an AF 110).

The (R)AN 102 corresponds to the NG-RAN 48 and the NG-RAN 49 in Fig. 10. The UPF 103 corresponds to the UP-GW 50 and the UP-GW 51 in Fig. 10. The AMF 104 and the SMF 105 correspond to the CP-CN 46 and the CP-CN 47 in Fig. 10. The AUSF 107 corresponds to the AUSF 42 in Fig. 10. Further, as shown in Fig. 22, in the communication system shown in Fig. 22, NG1-NG15 interfaces are configured between apparatuses or functionalities.

The UDM 108 manages subscriber data (UE Subscription or Subscription information). Further, the UDM 108 may be, for example, a node apparatus that executes the ARPF.

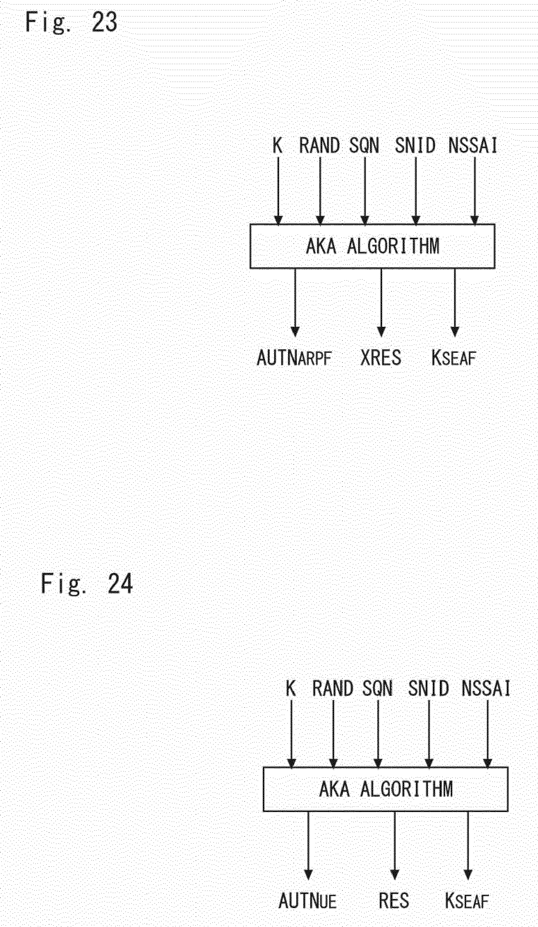

Referring next to Fig. 23, an AKA algorithm executed in the node apparatus that performs the ARPF will be explained. The node apparatus that executes the ARPF may be, for example, the UDM 108. As parameters input to the AKA algorithm, K, RAND, Sequence Number (SQN), SNID, and the NSSAI are used. Further, when the K, the RAND, the Sequence Number (SQN), the SNID, and the NSSAI are input to the AKA algorithm, AUTN_ARPF, the XRES, and the K_{SEAF} are generated. Further, Fig. 24 shows an ALA algorithm executed in the UE 101. In the UE 101 as well, the K, the RAND, the Sequence Number (SQN), the SNID, and the NSSAI are used as parameters, in a way similar to that in the ARPF. Further, in the UE 101, when the AKA algorithm is executed, AUTN_UE, the RES and the K_{SEAF} are generated. Further, a network slice ID, a tenant ID, a Slice/Service Type (SST), a Slice Differentiator (SD) may be used as input parameters shown in Figs. 23 and 24.

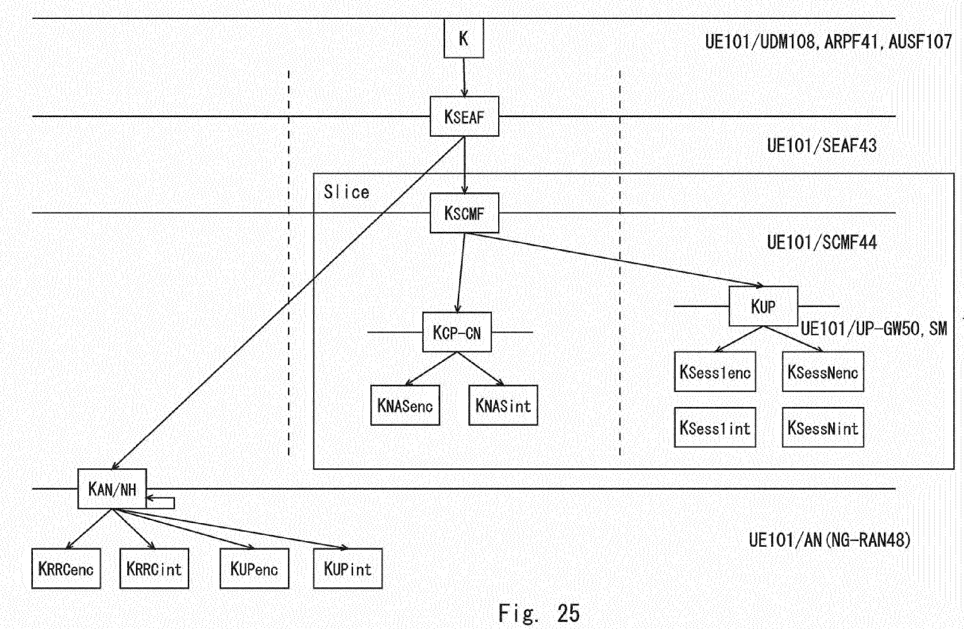

Referring next to Fig. 25, a modified example of the hierarchical structure of the security keys shown in Fig. 11 will be explained. The hierarchical structure shown in Fig. 25 is different from the hierarchical structure shown in Fig. 11 in that the NG-RAN 48 derives the K_{AN} using the security key K_{SEAF}. Since the other points of the hierarchical structure shown in Fig. 25 are similar to those shown in Fig. 11, the detailed descriptions thereof will be omitted.

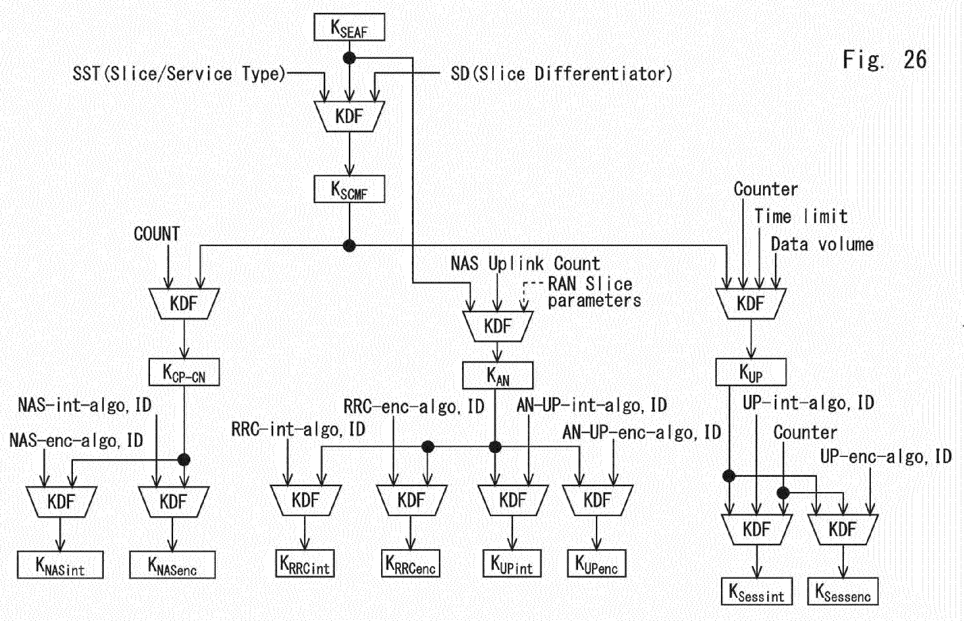

Referring next to Fig. 26, a flow of derivation of the security keys in the hierarchical structure of the security keys shown in Fig. 25 will be explained. A Key Derivation Function (KDF) is used to derive security keys. The security key K_{SCMF} is derived as the security key K_{SEAF}, Slice/Service Type (SST), and the Slice Differentiator (SD) are input to the KDF. The security key K_{CP-CN} is derived as the security key K_{SCMF} and COUNT are input to the KDF. Further, for all the KDFs shown in Fig. 26, the values of the SST, the SD, the NSSAI, the network slice ID, and the tenant ID, or values derived using these values may be used as input values.

A security key K_{NAS_MMint} is derived as the NAS-int-algo and the security key K_{CP-CN} are input to the KDF. The security key K_{NASenc} is derived as the NAS-enc-algo and the security key K_{CP-CN} are input to the KDF.

The security key K_{UP} is derived as the security key K_{SCMF}, Counter, Time limit, and the Data volume are input to the KDF. The security key K_{Sessint} is derived as the security key K_{UP}, UP-int-algo, and Counter are input to the KDF. The security key K_{Sessenc} is derived as the security key K_{UP}, UP-enc-algo, and the Counter are input to the KDF.

The security key K_{AN} is derived as the security key K_{SEAF}, a NAS Uplink Count, and RAN slice parameters are input to the KDF. The security key K_{RRCint} is derived as the security key K_{AN} and the RRC-int-algo are input to the KDF. The security key K_{RRCenc} is derived as the security key K_{AN} and RRC-enc-algo are input to the KDF. The security key K_{UPint} is derived as the security key K_{AN} and AN-UP-int-algo are input to the KDF. The security key K_{UPenc} is derived as the security key K_{AN} and AN-UP-enc-algo are input to the KDF.

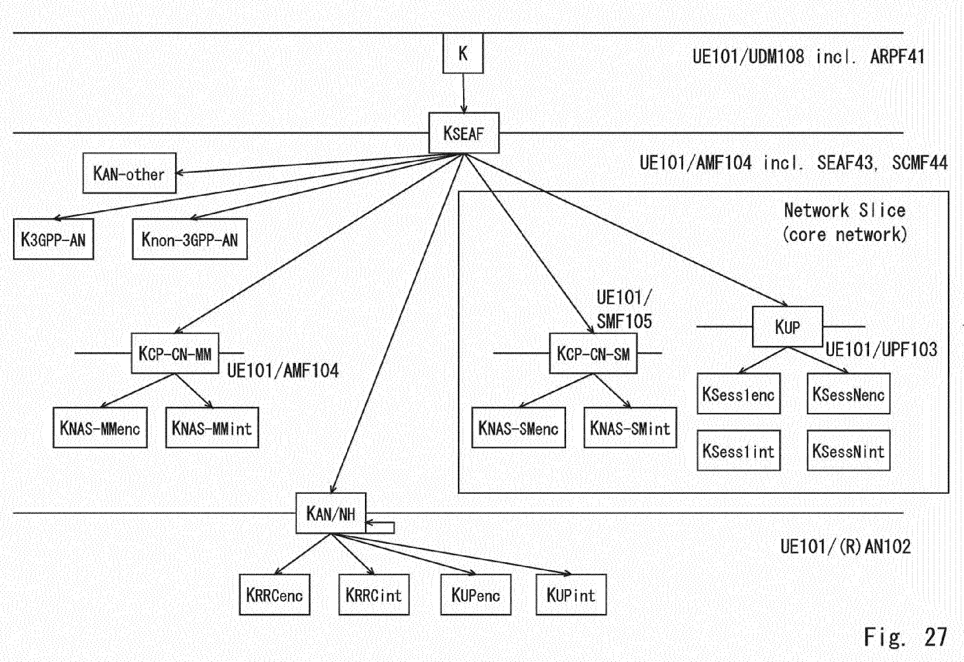

Referring next to Fig. 27, a modified example of the hierarchical structure of the security keys shown in Fig. 11 will be explained. In the hierarchical structure shown in Fig. 27, the AMF 104 generates a security key K_{CP-CN_MM}, a security key K_{AN_other}, a security key K_{3GPP_AN}, and a security key K_{non_3GPP_AN} from the security key K_{SEAF} received from the UDM 108. The AMF 104 further generates a security key K_{NAS_MM_enc} and a security key K_{NAS_MM_int} from the security key K_{CP-CN_MM}. The security key K_{NAS-MM_enc} and the security key K_{NAS-MM_int} are used for the integrity protection and the encryption of the NAS message associated with Mobility Management.

The AMF 104 transmits the security key K_{SEAF} to the SMF 105, the UPF 103, and the (R)AN 102.

The SMF 105 derives a security key K_{CP-CN_SM} from the security key K_{SEAF}. Further, the SMF 105 generates a security key K_{NAS-SM_enc} and a security key K_{NAS-SM_int} from the security key K_{CP-CN_SM}. The security key K_{NAS-SM_enc} and the security key K_{NAS-SM_int} are used for the integrity protection and the encryption of the NAS message associated with Session Management.

The UPF 103 derives the security key K_{UP} from the security key K_{SEAF}. Further, the SMF 105 generates the security key K_{Sess1enc}, and the security key K_{Sess1int} used for the integrity protection processing of the NAS message from the security key K_{UP}. The UPF 103 further generates the security key K_{SessNenc} and the security key K_{SessNint} as security keys used in a desired session N.

The (R)AN 102 derives a security key K_{AN/NH} from the security key K_{SEAF}. The (R)AN 102 further generates the security key K_{RRCenc}, the security key K_{RRCint}, the security key K_{UPenc} and the security key K_{UPint} from the security key K_{AN/NH}.

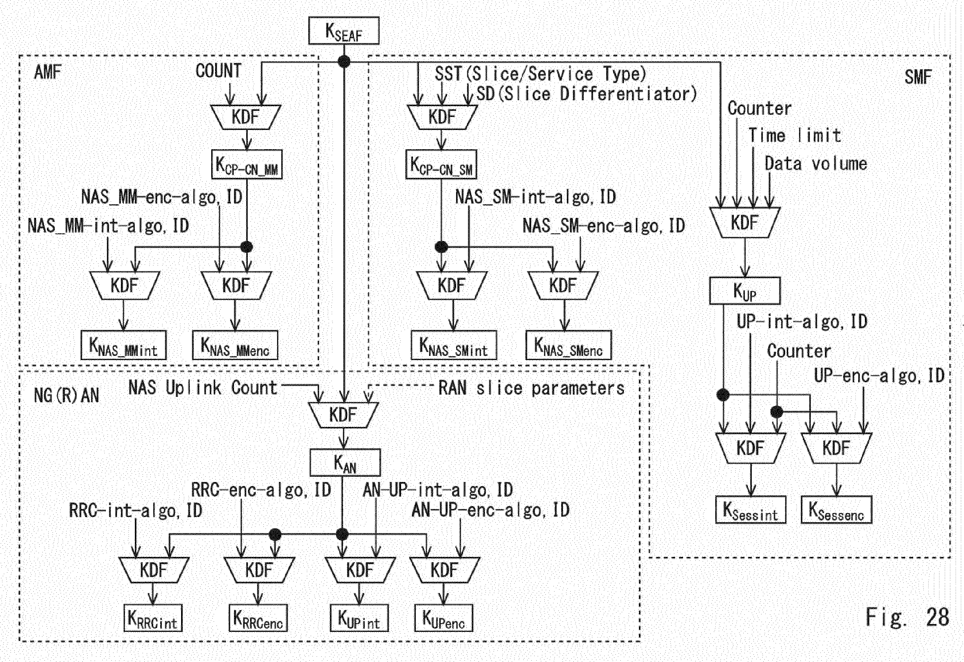

Referring next to Fig. 28, a flow of derivation of the security keys in the hierarchical structure of the security keys shown in Fig. 27 will be explained. The security key K_{CP-CN_MM} is derived as the security key K_{SEAF} and the COUNT are input to the KDF in the AMF 104. The security key K_{NAS_MMint} is derived as a NAS_MM-int-algo and the security key K_{CP-CN}__{MM} are input to the KDF. A security key K_{NAS_MMenc} is derived as a NAS_MM-enc-algo and the security key K_{CP-CN_MM} are input to the KDF.

The security key K_{CP-CN_SM} is derived as the security key K_{SEAF}, the SST and the SD are input to the KDF in the SMF 105. A security key K_{NAS_SMint} is derived as the NAS_SM-int-algo and the security key K_{CP-CN_SM} are input to the KDF. A security key K_{NAS_SMenc} is derived as the NAS_SM-enc-algo and the security key K_{CP-CN_SM} are input to the KDF.

The security key K_{UP} is derived as the security key K_{SEAF}, the Counter, the Time limit, and the Data volume are input to the KDF in the SMF 105. Since the security key K_{Sessint} and the security key K_{Sessenc} are derived by a method similar to that shown in Fig. 26, the detailed descriptions thereof will be omitted.

Since the security key K_{AN}, the security key K_{RRCint}, the security key K_{RRCenc}, the security key K_{UPint}, and the security key K_{UPenc} are derived by a method similar to that shown in Fig. 26, the detailed descriptions thereof will be omitted. Further, the security key K_{AN}, the security key K_{RRCint}, the security key K_{RRCenc}, the security key K_{UPint}, and the security key K_{UPenc} are derived in the NG-RAN 48 that corresponds to the (R)AN 102.

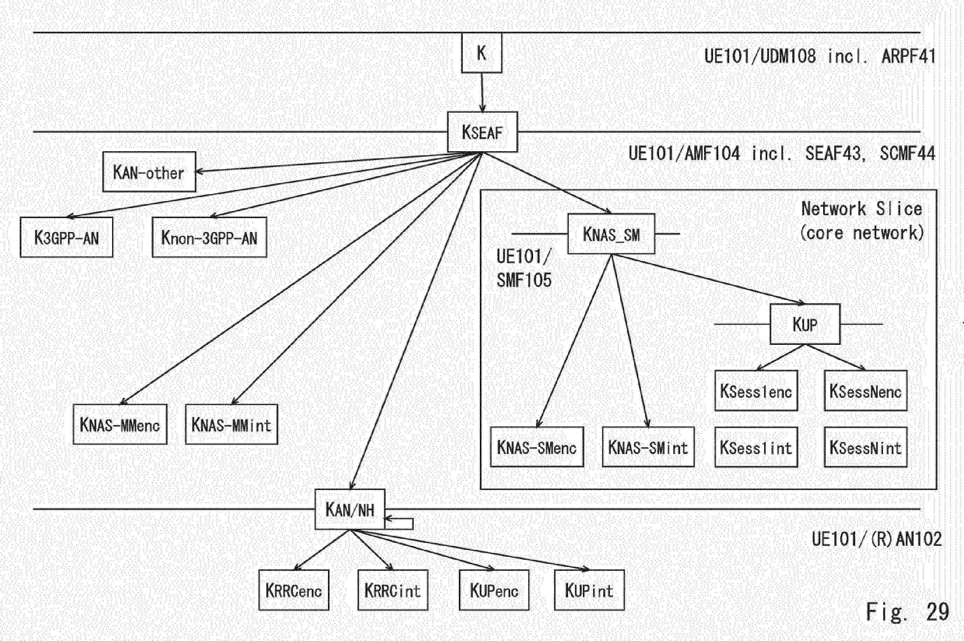

Referring next to Fig. 29, a modified example of the hierarchical structure of the security keys shown in Fig. 11 will be explained. In the hierarchical structure shown in Fig. 29, the AMF 104 generates a security key K_{NAS-MMenc}, a security key K_{NAS-MMint}, the security key K_{AN_other}, the security key K_{3GPP_AN}, and the security key K_{non-3GPP_AN} from the security key K_{SEAF} received from the UDM 108.

The AMF 104 transmits the security key K_{SEAF} to the SMF 105 and the (R)AN 102.

The SMF 105 generates the security key K_{NAS_SM} from the security key K_{SEAF}. Further, the SMF 105 generates the security key K_{UP}, the security key K_{NAS-SM_enc} and the security key K_{NAS-SM_int} from the security key K_{NAS_SM}. Further, the SMF 105 generates the security key K_{Sess1enc} and the security key K_{Sess1int} from the security key K_{UP}. Further, the SMF 105 generates the security key K_{SessNenc} and the security key K_{SessNint} as security keys used in a desired session N.

The (R)AN 102 generates the security key K_{AN/NH} from the security key K_{SEAF}. Further, the (R)AN 102 generates the security key K_{RRCenc}, the security key K_{RRCint}, the security key K_{UPenc} and the security key K_{UPint} from the security key K_{AN/NH}.

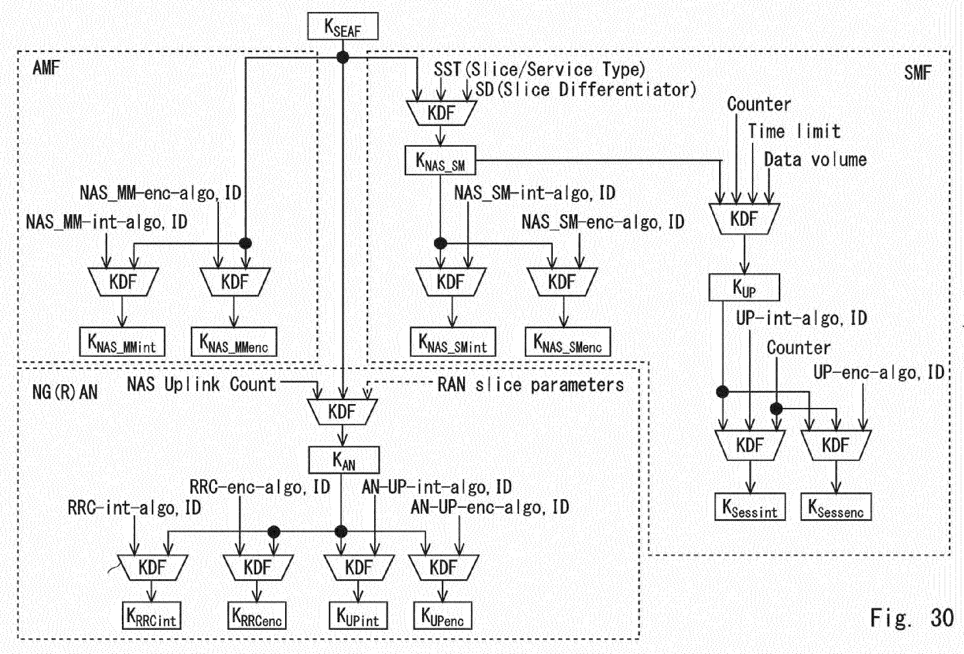

Referring next to Fig. 30, a flow of derivation of the security keys in the hierarchical structure of the security keys shown in Fig. 29 will be explained. The security key K_{NAS_MMint} is derived as the NAS_MM-int-algo and the security key K_{SEAF} are input to the KDF in the AMF 104. The security key K_{NAS_MMenc} is derived as the NAS_MM-enc-algo and the security key K_{SEAF} are input to the KDF.

The security key K_{NAS_SM} is derived as the security key K_{SEAF}, the SST and the SD are input to the KDF in the SMF 105. The security key K_{NAS_SMint} is derived as the NAS_SM-int-algo and the security key K_{NAS_SM} are input to the KDF. The security key K_{NAS_SMenc} is derived as the NAS_SM-enc-algo and the security key K_{NAS_SM} are input to the KDF.

The security key K_{UP} is derived as the security key K_{NAS_SM}, the Counter, the Time limit, and the Data volume are input to the KDF in the SMF 105. Since the security key K_{Sessint} and the security key K_{Sessenc} are derived by a method similar to that in Fig. 26, the detailed descriptions thereof will be omitted.

Since the security key K_{AN}, the security key K_{RRCint}, the security key K_{RRCenc}, the security key K_{UPint}, and the security key K_{UPenc} are derived by a method similar to that shown in Fig. 26, the detailed descriptions thereof will be omitted. Further, the security key K_{AN}, the security key K_{RRCint}, the security key K_{RRCenc}, the security key K_{UPint}, and the security key K_{UPenc} are derived in the NG-RAN 48 that corresponds to the (R)AN 102.

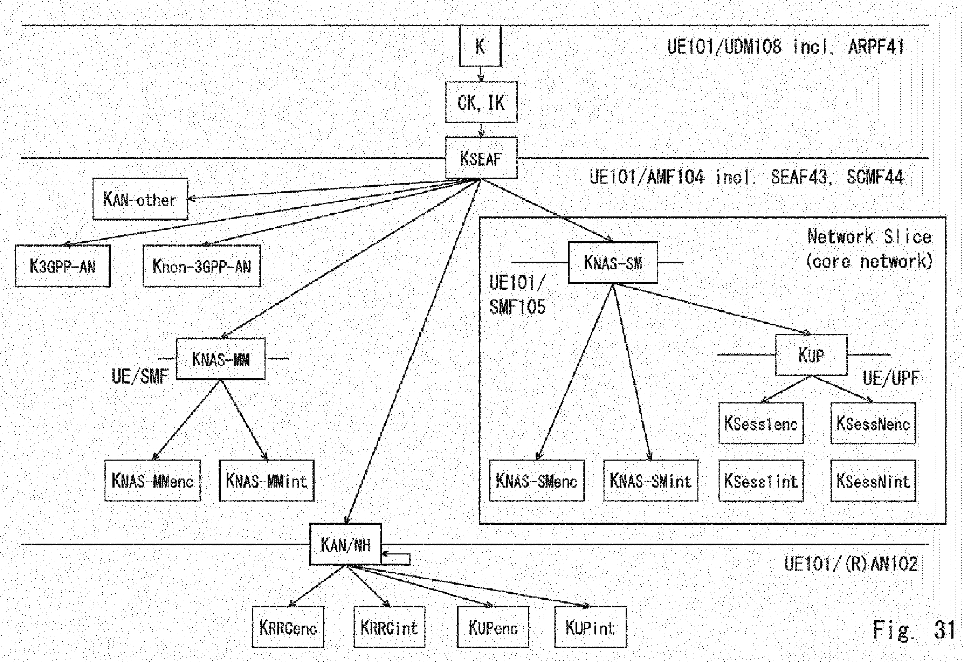

Referring next to Fig. 31, a modified example of the hierarchical structure of the security keys shown in Fig. 11 will be explained. In the hierarchical structure shown in Fig. 31, the UDM 108 derives a Cipher Key (CK) and an Integrity Key (IK) from the security key K. Further, the UDM 108 derives the security key K_{SEAF} from the CK and the IE. Further, the hierarchical structure shown in Fig. 31 is different from the hierarchical structure shown in Fig. 29 in that the AMF 104 derives the security key K_{NAS-MM} from the security key K_{SEAF} received from the UDM 108 and generates the security key K_{NAS-MMint} and the security key K_{NAS-MMenc} from the security key K_{NAS-MM}. Since the other hierarchical structures in Fig. 31 are similar to those shown in Fig. 29, the detailed descriptions thereof will be omitted.

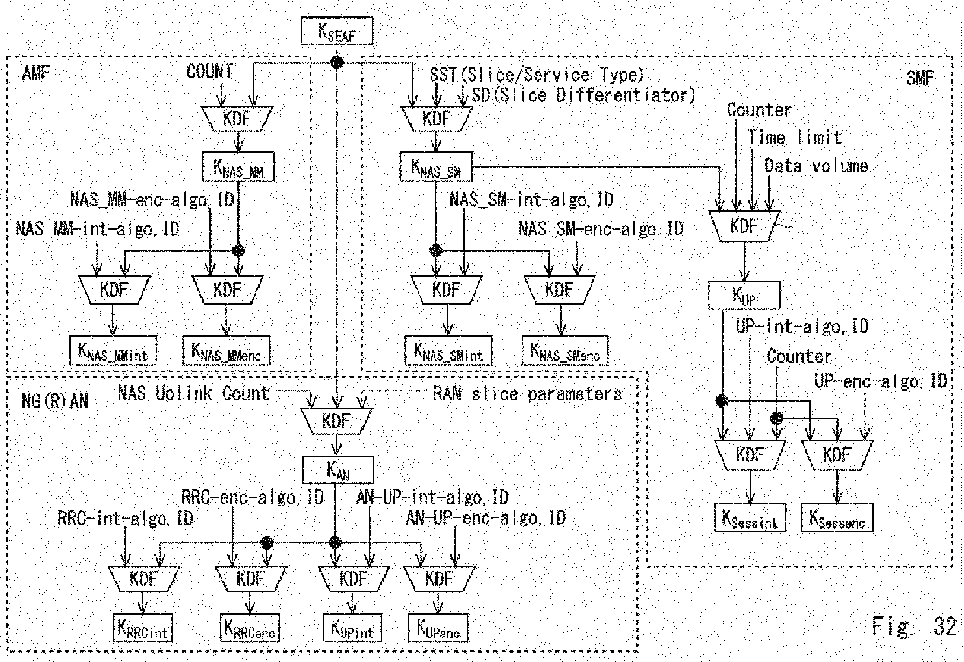

Referring next to Fig. 32, a flow of derivation of the security keys in the hierarchical structure of the security keys shown in Fig. 31 will be explained. The security key K_{NAS_MM} is derived as the COUNT and the security key K_{SEAF} are input to the KDF in the AMF 104. The security key K_{NAS_MMint} is derived as the NAS_MM-int-algo and the security key K_{NAS_MM} are input to the KDF in the AMF 104. The security key K_{NAS_MMenc} is derived as the NAS_MM-enc-algo and the security key K_{NAS_MM} are input to the KDF.

Since the derivation of the security keys executed in the SMF 105 and the NG-RAN 48 is similar to that in Fig. 30, the detailed descriptions thereof will be omitted.

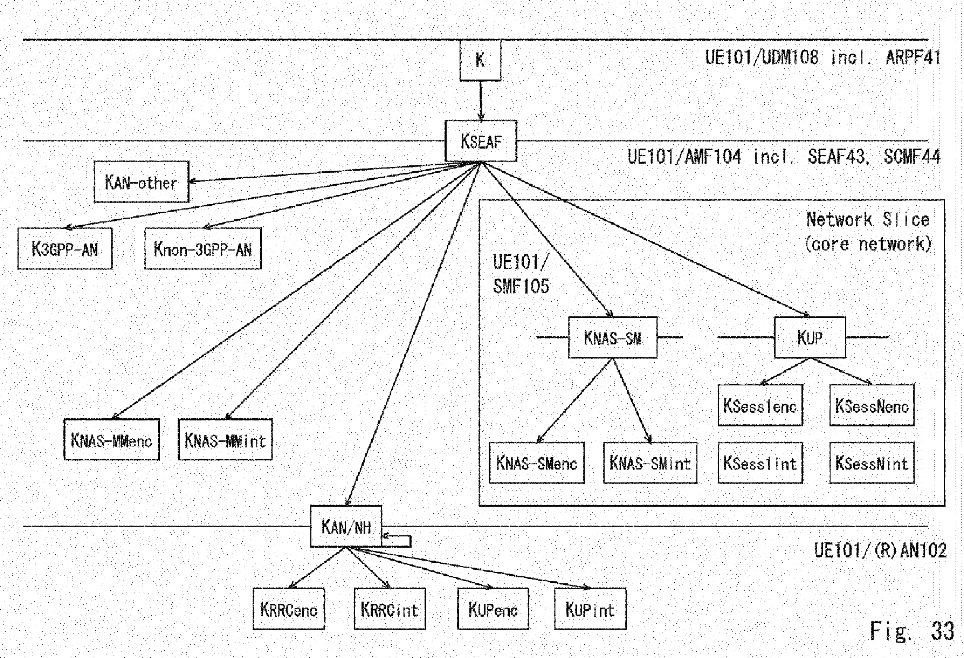

Referring next to Fig. 33, a modified example of the hierarchical structure of the security keys shown in Fig. 11 will be explained. In the hierarchical structure shown in Fig. 33, the SMF 105 generates the security key K_{UP} from the security key K_{SEAF} received from the AMF 104. Since the hierarchical structures of the other security keys are similar to those shown in Fig. 29, the detailed descriptions thereof will be omitted.

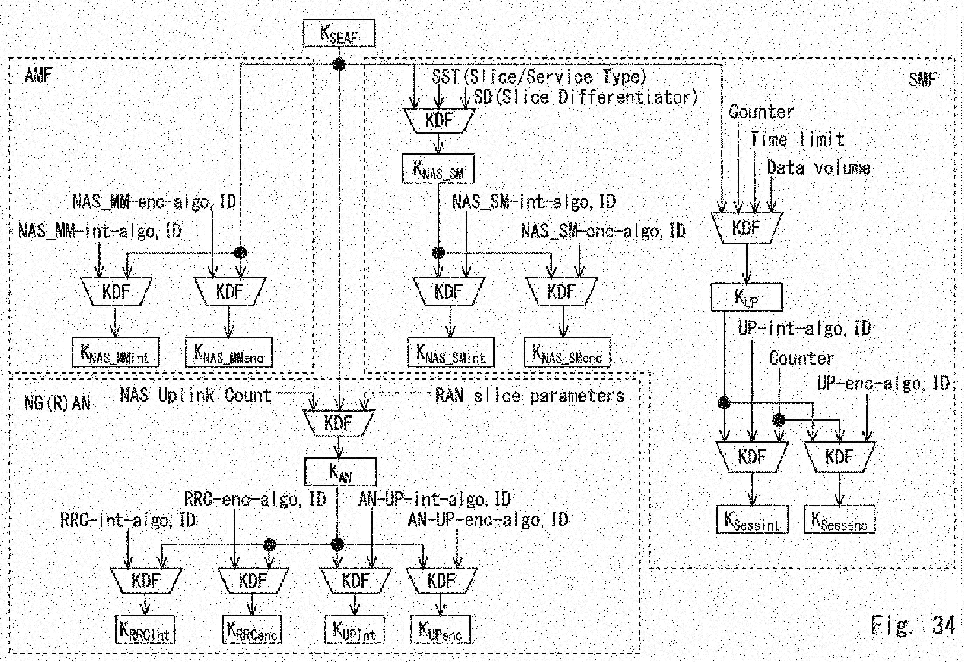

Referring next to Fig. 34, a flow of derivation of the security keys in the hierarchical structure of the security keys shown in Fig. 33 will be explained. The security key K_{UP} is derived as the Counter, the Time limit, the Data volume, and the security key K_{SEAF} are input to the KDF in the SMF 105.

Since the derivation of the other security keys executed in the SMF 105 and the derivation of the security keys executed in the AMF 104 and the NG-RAN 48 are similar to those shown in Fig. 30, the detailed descriptions thereof will be omitted.

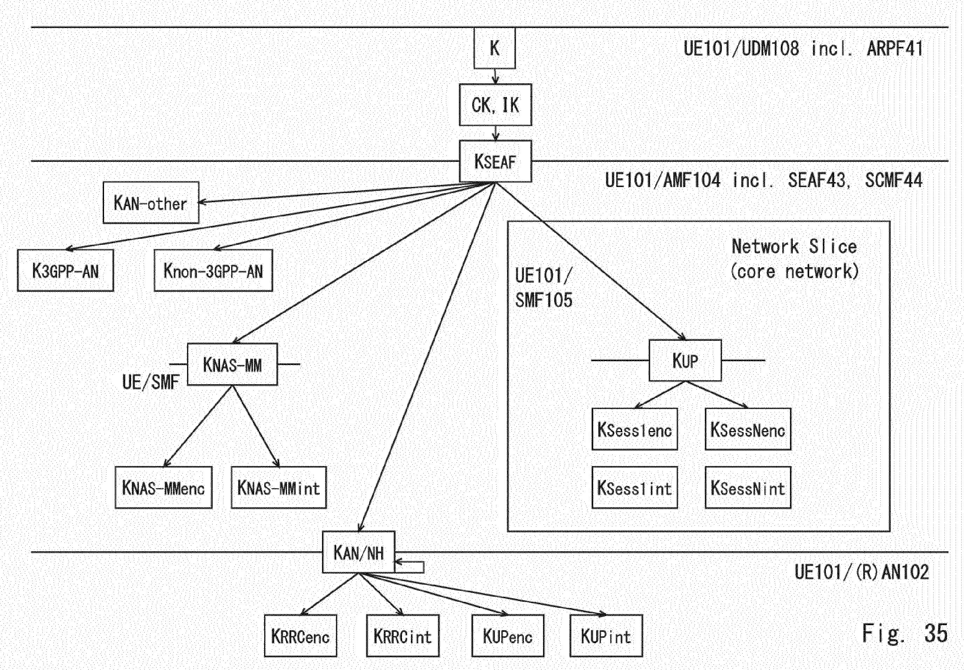

Referring next to Fig. 35, a modified example of the hierarchical structure of the security keys shown in Fig. 11 will be explained. In the hierarchical structure shown in Fig. 35, the SMF 105 generates the security key K_{UP} from the security key K_{SEAF} received from the AMF 104. Further, the SMF 105 does not perform derivation of the security key K_{NAS-SM}. Since the hierarchical structures of the other security keys are similar to those shown in Fig. 31, the detailed descriptions thereof will be omitted.

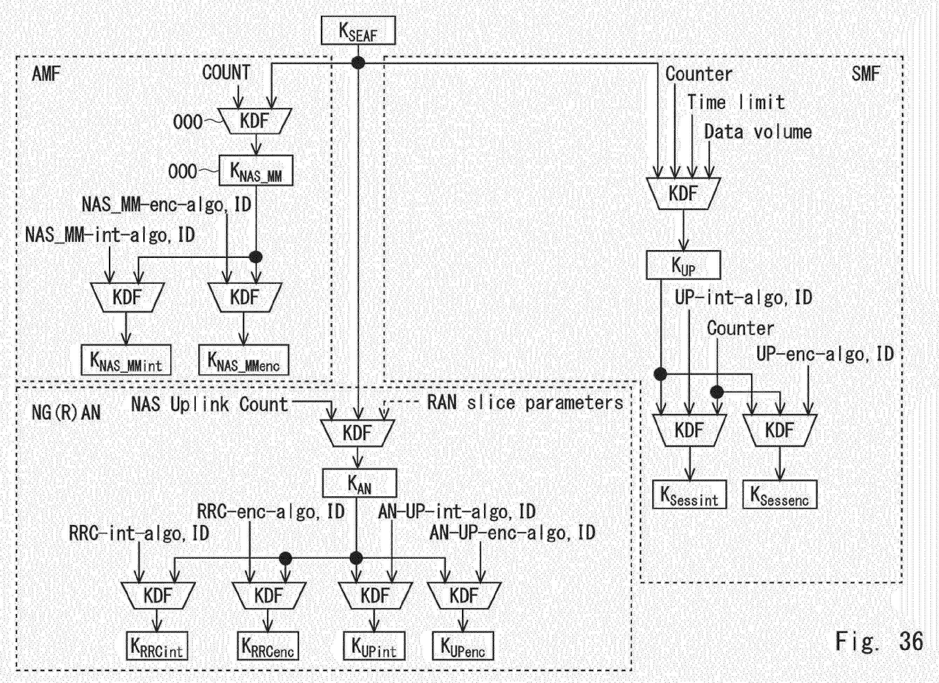

Referring next to Fig. 36, a flow of derivation of the security keys in the hierarchical structure of the security keys in Fig. 35 will be explained. The security key K_{UP} is derived as the Counter, the Time limit, the Data volume, and the security key K_{SEAF} are input to the KDF in the SMF 105. Further, the security key K_{NAS-SM} is not derived in the SMF 105.

Since the derivation of the security keys executed in the AMF 104 and the NG-RAN 48 is similar to that in Fig. 32, the detailed descriptions thereof will be omitted.

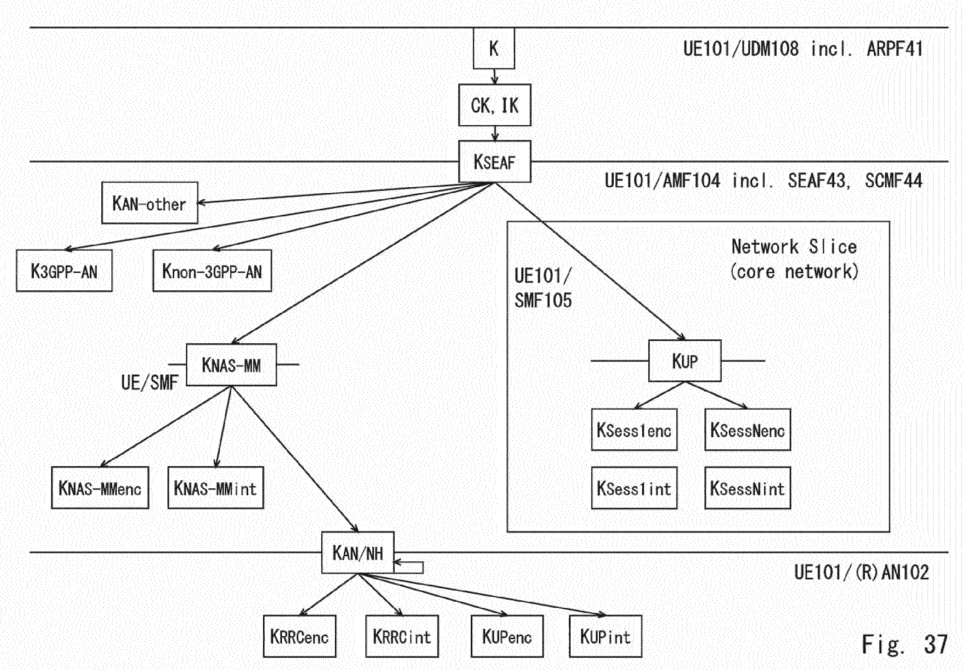

Referring next to Fig. 37, a modified example of the hierarchical structure of the security keys shown in Fig. 11 will be explained. In the hierarchical structure shown in Fig. 37, the AMF 104 transmits the derived security key K_{NAS-MM} to the (R)AN 102. Further, the (R)AN 102 generates the security key K_{AN/NH} from the security key K_{NAS-MM} received from the AMF 104. Since the hierarchical structures of the other security keys are similar to those shown in Fig. 35, the detailed descriptions thereof will be omitted.

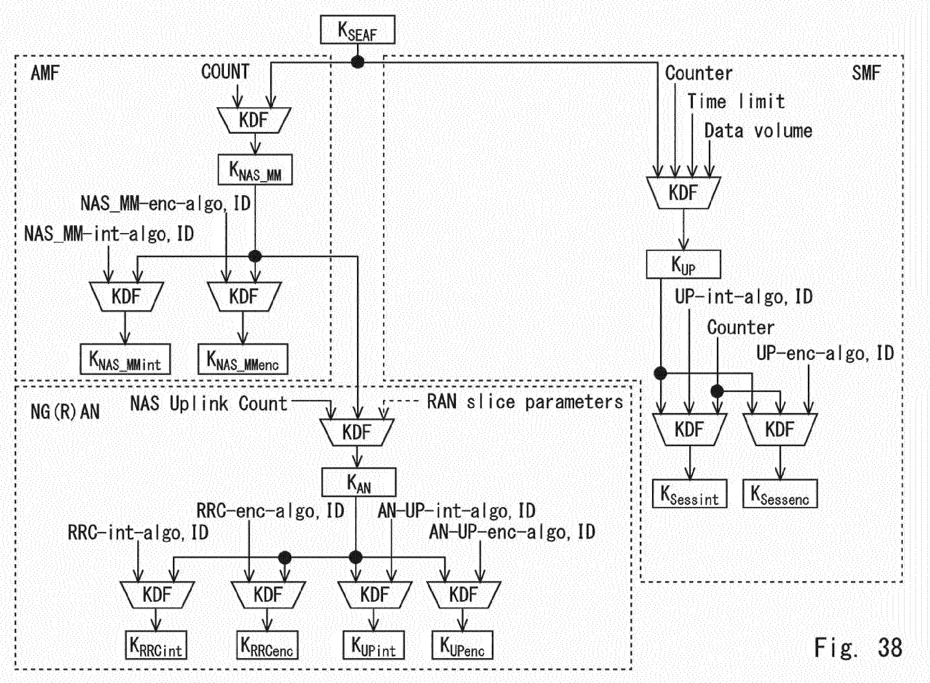

Referring next to Fig. 38, a flow of derivation of the security keys in the hierarchical structure of the security keys in Fig. 37 will be explained. The security key K_{AN/NH} is derived as the security key K_{NAS-MM}, the NAS Uplink Count, and the RAN slice parameters are input to the KDF in the NG-RAN 48 that corresponds to the (R)AN 102.

Since the derivation of the other security keys executed in the NG-RAN 48 and further the derivation of the security keys executed in the AMF 104 and the SMF 105 are similar to those shown in Fig. 36, the detailed descriptions thereof will be omitted.

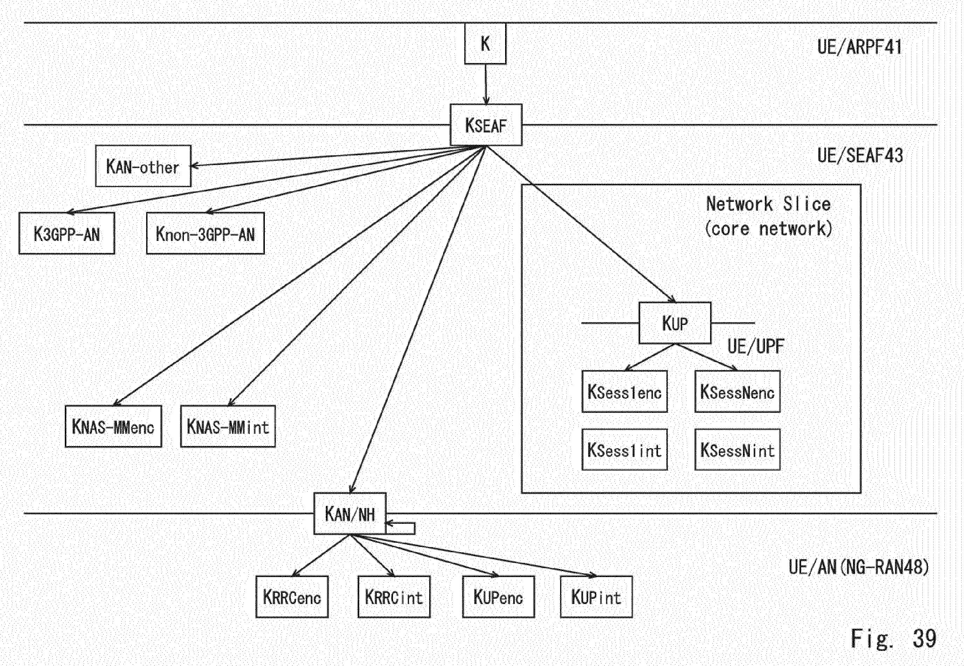

Referring next to Fig. 39, a modified example of the hierarchical structure of the security keys shown in Fig. 11 will be explained. The hierarchical structure shown in Fig. 39 is different from the hierarchical structure shown in Fig. 33 in that the SMF 105 does not perform derivation of the security key K_{NAS-SM}. Since the other hierarchical structures in Fig. 39 are similar to those shown in Fig. 33, the detailed descriptions thereof will be omitted.

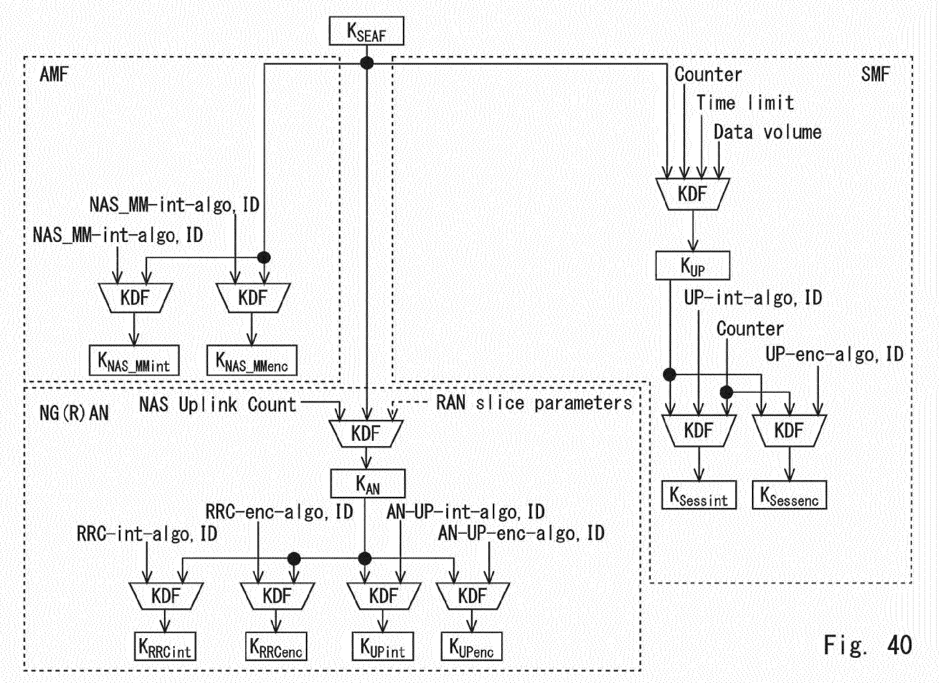

Referring next to Fig. 40, a flow of derivation of the security keys in the hierarchical structure of the security keys in Fig. 39 will be explained. The flow of derivation of the security keys shown in Fig. 40 is different from the flow of derivation of the security keys shown in Fig. 34 in that the security key K_{NAS-SM} is not derived in the SMF 105 in Fig. 40. Since the flow of derivation of the other security keys shown in Fig. 40 is similar to that shown in Fig. 34, the detailed descriptions thereof will be omitted.

While the example in which the AMF 104, the SMF 105, the UPF 103, the NG-RAN 48 and the like derive the security keys has been described in the aforementioned description, security keys the same as those derived in the respective entities (node apparatuses) are derived also in the UE 101.

By using the hierarchical structures of the security keys and the flow of derivation of the security keys described with reference to Figs. 23-40, a specific parameter (Count) associated with the network slice and the mobility may be, for example, used to derive each of the security key K_{NAS-SM} and the security key K_{NAS-MM}.

While the aforementioned example embodiments have been described as examples that are formed of hardware, they are not limited to them. This disclosure may achieve processing in the UE and each of the apparatuses by causing a Central Processing Unit (CPU) to execute a computer program.

In the aforementioned example embodiments, the program(s) can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magnetooptical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). The program(s) may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

The present disclosure is not limited to the aforementioned example embodiments and may be changed as appropriate without departing from the spirit of the present disclosure. Further, the present disclosure may be executed by combining the example embodiments as appropriate.

While the present disclosure has been described above with reference to the example embodiments, the present disclosure is not limited thereto. Various changes that may be understood by one skilled in the art may be made to the configuration and the details of the present disclosure.

This application is based upon and claims the benefit of priority from Indian Patent Application Nos. 201611036774 and 201611036775, filed on October 26, 2016, and Indian Patent Application No. 201711003071, filed on January 27, 2017, the disclosures of which are incorporated herein in its entirety by reference.

### Reference Signs List

- 10: COMMUNICATION TERMINAL
- 10_1: COMMUNICATION TERMINAL
- 20: NETWORK APPARATUS
- 20_1: CORE NETWORK SYSTEM
- 30: MOBILE NETWORK
- 41: ARPF
- 42: AUSF
- 43: SEAF
- 44: SCMF
- 45: SCMF
- 46: CP-CN
- 47: CP-CN
- 48: NG-RAN
- 49: NG-RAN
- 50: UP-GW
- 51: UP-GW
- 101: UE
- 102: (R)AN
- 103: UPF
- 104: AMF
- 105: SMF
- 106: PCF
- 107: AUSF
- 108: UDM
- 109: DN
- 110: AF

## Claims

1. A communication system comprising:
a communication terminal configured to transmit an Attach Request message including Network Slice Selection Assistance Information (NSSAI) and User Equipment (UE) Security Capabilities; and
a network apparatus that is arranged in a mobile network and receives the Attach Request message,
wherein the network apparatus determines, using the NSSAI and the UE Security Capabilities, whether to allow connection of the communication terminal to a core network indicated by the NSSAI among a plurality of core networks partitioned by network slicing.

2. The communication system according to Claim 1, wherein
the network apparatus is a radio apparatus that performs radio communication with the communication terminal,
the network apparatus further comprises a security apparatus that performs authentication processing regarding the communication terminal and is arranged in the mobile network,
the radio apparatus transmits the Attach Request message to the security apparatus, and
the security apparatus verifies or checks integrity of the Attach Request message and transmits the results of the verification or the check to the radio apparatus.

3. The communication system according to Claim 1, wherein the network apparatus is a core network apparatus arranged in a core network included in the mobile network, derives a security key by executing Authentication and Key Agreement (AKA) processing with the communication terminal, and verifies or checks integrity of the Attach Request message using the security key.

4. The communication system according to Claim 1, wherein
the network apparatus is a core network apparatus arranged in a core network included in the mobile network, and
the network apparatus distributes processing for determining whether to allow connection of the communication terminal to the core network indicated by the NSSAI among a plurality of core networks partitioned by network slicing using the NSSAI and the UE Security Capabilities in a plurality of network apparatuses.

5. A network apparatus that is configured to perform the following processing of:
receiving an Attach Request message from a communication terminal configured to transmit the Attach Request message including Network Slice Selection Assistance Information (NSSAI) and User Equipment (UE) Security Capabilities; and
determining, using the NSSAI and the UE Security Capabilities, whether to allow connection of the communication terminal to a core network indicated by the NSSAI among a plurality of core networks partitioned by network slicing.

6. An authentication method comprising:
receiving an Attach Request message from a communication terminal that transmits the Attach Request message including Network Slice Selection Assistance Information (NSSAI) and User Equipment (UE) Security Capabilities; and
determining whether to allow connection of the communication terminal to a core network indicated by the NSSAI among a plurality of core networks partitioned by network slicing using the NSSAI and the UE Security Capabilities.

7. A communication system comprising:
a communication terminal that transmits an Attach Request message including Network Slice Selection Assistance Information (NSSAI); and
a network apparatus that is arranged in a mobile network and receives the Attach Request message,
wherein each of the communication terminal and the network apparatus uses at least the NSSAI as an input and executes Authentication and Key Agreement (AKA), whereby the communication terminal and the network apparatus derive one security key.

8. A network apparatus configured to receive, from a communication terminal that transmits an Attach Request message including Network Slice Selection Assistance Information (NSSAI), the Attach Request message, wherein
the network apparatus uses at least the NSSAI as an input, and executes Authentication and Key Agreement (AKA) with the communication terminal, whereby it is configured to derive a security key the same as a security key that the communication terminal derives.

9. A communication terminal configured to transmit an Attach Request message including Network Slice Selection Assistance Information (NSSAI) to a network apparatus arranged in a mobile network, wherein
the communication terminal uses at least the NSSAI as an input, and executes Authentication and Key Agreement (AKA) with the network apparatus, whereby it is configured to derive a security key the same as a security key that the network apparatus derives.

10. A communication system comprising:
a communication terminal; and
a core network system configured to execute a NAS Security Procedure regarding the communication terminal, wherein
the core network system acquires a security key using Network Slice Selection Assistance Information (NSSAI) and User Equipment (UE) Security Capabilities in the NAS Security Procedure, and transmits information associated with the NSSAI and the UE Security Capabilities to the communication terminal, and
the communication terminal acquires the security key using the information associated with the NSSAI and the UE Security Capabilities.

11. The communication system according to Claim 10, wherein
the core network system acquires an encryption key and an integrity protection key from the security key, and transmits a ciphering algorithm and an integrity protection algorithm executed using the encryption key and the integrity protection key to the communication terminal, and
the communication terminal acquires an encryption key and an integrity protection key used in a NAS protocol in order to use the ciphering algorithm and the integrity protection algorithm.

12. A communication system comprising:
a communication terminal; and
a core network system configured to execute a UP Security Procedure regarding the communication terminal, wherein
the core network system acquires a security key using Network Slice Selection Assistance Information (NSSAI) in the UP Security Procedure, acquires a user plane encryption key and a user plane integrity protection key used in a session that forwards user data using the security key, and transmits an algorithm executed using the user plane encryption key and the user plane integrity protection key to the communication terminal, and
the communication terminal acquires the security key regarding the UP Security Procedure acquired in the core network system in order to use the algorithm.

13. A security apparatus comprising:
a key generation unit configured to acquire a security key using Network Slice Selection Assistance Information (NSSAI) and User Equipment (UE) Security Capabilities in a NAS Security Procedure, and
a communication unit configured to transmit information associated with the NSSAI and the UE Security Capabilities to a communication terminal.

14. A security apparatus comprising:
a key generation unit configured to acquire a security key using Network Slice Selection Assistance Information (NSSAI) in a UP Security Procedure, and acquire a user plane encryption key and a user plane integrity protection key used in a session that forwards user data using the security key; and
a communication unit configured to transmit an algorithm executed using the user plane encryption key and the user plane integrity protection key to a communication terminal.

15. A communication terminal comprising:
a communication unit configured to receive information associated with Network Slice Selection Assistance Information (NSSAI) and User Equipment (UE) Security Capabilities from a core network system; and
a key generation unit configured to acquire a security key using the information associated with the NSSAI and the UE Security Capabilities in a NAS Security Procedure.

16. A communication terminal comprising:
a communication unit configured to receive an algorithm executed using a user plane encryption key and a user plane integrity protection key in a UP Security Procedure from a core network system; and
a key generation unit configured to acquire the user plane encryption key and the user plane integrity protection key acquired in the core network system in order to use the algorithm.

17. A communication method in a core network system, the method comprising:
acquiring a security key using Network Slice Selection Assistance Information (NSSAI) and User Equipment (UE) Security Capabilities in a NAS Security Procedure; and
transmitting information associated with the NSSAI and the UE Security Capabilities to a communication terminal.

18. A communication method in a communication terminal, comprising:
receiving information associated with Network Slice Selection Assistance Information (NSSAI) and User Equipment (UE) Security Capabilities from a security apparatus; and
acquiring a security key using the information associated with the NSSAI and the UE Security Capabilities in a NAS Security Procedure.

19. A communication method in a core network system, the method comprising:
acquiring a security key using Network Slice Selection Assistance Information (NSSAI) in a UP Security Procedure;
acquiring a user plane encryption key and a user plane integrity protection key used in a session that forwards user data using the security key; and
transmitting an algorithm executed using the user plane encryption key and the user plane integrity protection key to a communication terminal.

20. A communication method in a communication terminal, the method comprising:
receiving an algorithm executed using a user plane encryption key and a user plane integrity protection key in a UP Security Procedure from a core network system; and
acquiring the user plane encryption key and the user plane integrity protection key acquired in the core network system in order to use the algorithm.

21. The communication system according to Claim 10, wherein the information associated with the NSSAI and the UE Security Capabilities is a NAS Security Mode Command message.

22. The security apparatus according to Claim 13, wherein the information associated with the NSSAI and the UE Security Capabilities is a NAS Security Mode Command message.

23. The communication terminal according to Claim 15, wherein the information associated with the NSSAI and the UE Security Capabilities is a NAS Security Mode Command message.
